(19) **Europäisches Patentamt / European Patent Office / Office européen des brevets**

(11) **EP 3 133 250 A1**

(12) # EUROPEAN PATENT APPLICATION

(43) Date of publication:
**22.02.2017  Bulletin 2017/08**

(21) Application number: **16181868.7**

(22) Date of filing: **29.07.2016**

(51) Int Cl.:
**F01D 11/02** (2006.01)   **F02C 7/28** (2006.01)
**F16J 15/00** (2006.01)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority:  **18.08.2015  GB 201514651**

(71) Applicant: **Rolls-Royce plc**
**London SW1E 6AT (GB)**

(72) Inventors:
• **Webster, John**
  **Derby, DE24 8BJ (GB)**
• **Franceschini, Gervas**
  **Derby, DE24 8BJ (GB)**
• **Aubry, James**
  **Derby, DE24 8BJ (GB)**
• **Gillespie, David**
  **Derby, DE24 8BJ (GB)**
• **Owen, Andrew**
  **Derby, DE24 8BJ (GB)**

(74) Representative: **Rolls-Royce plc**
**Intellectual Property Dept SinA-48**
**PO Box 31**
**Derby DE24 8BJ (GB)**

(54) ## SEALING ARRANGEMENTS

(57)     A sealing arrangement (30) for providing sealing between a first structure (10), e.g. a rotor shaft, and a second structure (15), e.g. a portion of a casing, of an engine, and between first (HP) and second (LP) pressure regions located between the first (10) and second (15) structures, the first pressure region (HP) being at a relatively higher pressure than the second pressure region (LP), and the first structure (10) being moveable relative to the second structure (15) along an axis, wherein the sealing arrangement (30) comprises: a sealing member (20), e.g. a sealing fin or disc, carried on the first structure (10) and extending towards the second structure (15), and having opposite first and second sides; and a rigid frame (40) mounted on the second structure (15) so as to be translatable relative thereto in a direction (S) substantially parallel to the said axis, the frame (40) comprising: a first seal portion (42) having opposite exterior and interior sides and a first seal face (60) on the interior side thereof, at least a portion of the first seal face (60) being in communication with the first pressure region (HP), and a second seal portion (44) spaced from the first seal portion (42) and having opposite exterior and interior sides and a second seal face (70) on the interior side thereof, at least a portion of the second seal face (70) being in communication with the second pressure region (LP), the first and second seal faces (60, 70) being spaced apart from one another with the first seal face (60) located to the first side of the sealing member (20) and the second seal face (70) located to the second side of the sealing member (20), and the frame (40) being configured and arranged, e.g. by use of a secondary seal device (90), such that the exterior sides of the first and second seal portions (42, 44) of the frame (40) are substantially pressure-balanced relative to each other; wherein: the first seal face (60) of the first seal portion (42) of the frame (40) and the first side of the sealing member (20) are configured to form a first pressure reduction zone (64), and the second seal face (70) of the second seal portion (44) of the frame (40) and the second side of the sealing member (20) are configured to form a second pressure reduction zone (74), and at least a portion of the first pressure reduction zone (64) is located relatively distal, in a direction substantially normal to the said axis, from the first structure (10) and at least a portion of the second pressure reduction zone (74) is located relatively proximal, in a direction substantially normal to the said axis, to the first structure (10), whereby the frame (40) is translatable relative to the second structure (15) in the said direction (S) substantially parallel to the said axis in response to relative movement of the first structure (10) along the said axis.

The relative radial positioning of the first and second pressure reduction zones gives rise to an automatic self-centring seal mechanism. The first and second pressure reduction zones may be designed with various          shapes and configurations.

FIG. 6(a)

**Description**

TECHNICAL FIELD

The present disclosure relates to sealing arrangements, especially to sealing arrangements for use within engines, in particular gas turbine engines. More particularly, though not exclusively, the disclosure relates to sealing arrangements and sealing apparatus for providing sealing between relatively moveable, especially relatively rotatable, components within engines, as well as between distinct regions within an engine which are at different fluid pressures.

BACKGROUND OF THE INVENTION

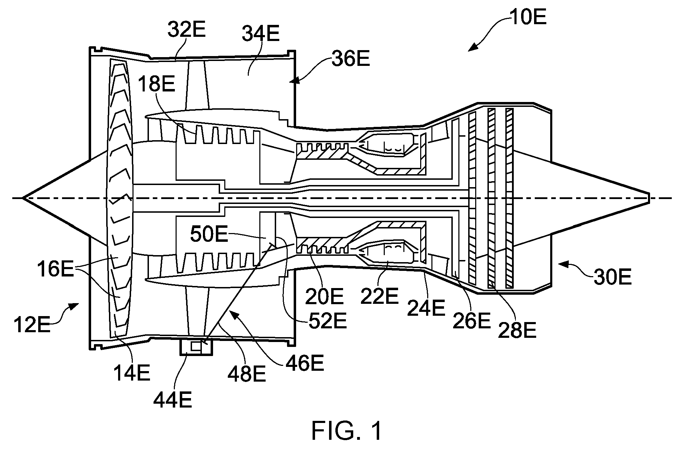

Figure 1 of the accompanying drawings is a schematic example representation of a known aircraft ducted fan gas turbine engine 10E comprising, in axial flow series: an air intake 12E, a propulsive fan 14E having a plurality of fan blades 16E, an intermediate pressure compressor 18E, a high-pressure compressor 20E, a combustor 22E, a high-pressure turbine 24E, an intermediate pressure turbine 26E, a low-pressure turbine 28E and a core exhaust nozzle 30E. A nacelle 32E generally surrounds the engine 10E and defines the intake 12E, a bypass duct 34E and a bypass exhaust nozzle 36E. Electrical power for the aero engine and aircraft systems is generated by a wound field synchronous generator 44E. The generator 44E is driven via a mechanical drive train 46E which includes an angle drive shaft 48E, a step-aside gearbox 50E and a radial drive 52E which is coupled to the high pressure compressor 20E via a geared arrangement.

Air entering the intake 12E is accelerated by the fan 14E to produce a bypass flow and a core flow. The bypass flow travels down the bypass duct 34E and exits the bypass exhaust nozzle 36E to provide the majority of the propulsive thrust produced by the engine 10E. However, a proportion of the bypass flow is taken off and fed internally to various downstream (hot) portions of the engine to provide a flow of relatively cool air at locations or to components as or where necessary. The core flow enters, in axial flow series, the intermediate pressure compressor 18E, high pressure compressor 20E and the combustor 22E, where fuel is added to the compressed air and the mixture burnt. The hot combustion gas products expand through and drive the sequential high 24E, intermediate 26E, and low-pressure 28E turbines before being exhausted through the nozzle 30E to provide additional propulsive thrust. The high, intermediate and low-pressure turbines 24E, 26E, 28E respectively drive the high and intermediate pressure compressors 20E, 18E and the fan 14E by interconnecting shafts 38E, 40E, 42E.

Within an engine such as that described above it is frequently necessary to seal a clearance gap between two components that are capable of relative movement, such as a rotatable member and a static member. In particular one or more seals are often required to provide a seal between a rotatable shaft and an axially or radially adjacent static component, e.g. part of the engine casing. For example, a gas turbine engine comprises shafts which rotate at relatively high speeds and which are exposed to pressurised hot gases. Seals are required between rotating turbine blades and surrounding static engine casing structures. Seals are also required between a rotor carrying such rotor blades and an adjacent static structure which carries stator vanes or nozzle guide vanes. In a gas turbine engine nozzle guide vanes or stator vanes are non-rotating and as such are mounted on a static structure.

It is generally also important to provide effective sealing arrangements to prevent hot pressurised gas in one pressure region within the engine from flowing freely into an adjacent, especially lower, pressure region. When such a demand is also made of sealing arrangements which provide a seal between relatively rotatable parts, this makes the design of efficient sealing arrangements particularly challenging.

It is well-known to provide labyrinth seals to seal between rotating and non-rotating members. However, under some engine operating conditions it may be necessary or desirable to provide relatively large clearances between the two members in order to accommodate relative movement between them, e.g. upon either or both of them undergoing thermal expansion or movement resulting from the application of certain loads or pressures. In order to reduce pressure losses as far as possible, it is therefore generally desirable to reduce the size of such clearance gaps as much as possible or at least to be able to alter them at certain operating conditions in order to achieve optimum power output of the engine.

It is generally also a requirement of such seals that an acceptable clearance gap is provided at all the differing engine conditions that may be encountered during use. Such seals between rotating and non-rotating members are generally not required to provide a completely closed seal, but generally are required to provide a seal with a predetermined clearance gap range.

Thermal expansion and changes in pressure conditions can also cause unbalanced forces on such seals and affect the seals' effectiveness. It is therefore generally also important that the clearance gap between a rotating part of the seal arrangement and its static part is kept within a predetermined range.

Based on the above premises, there have recently been proposed several designs of sealing arrangement which are of the nature of self-centring seals. Such seals, which are typically used to provide an effective amount of sealing between a rotatable structure and a generally static structure within an engine and further between distinct regions therein which are at different pressures, have as their object to provide a sealing arrangement which automatically adjusts the size of the clearance gap or gaps between the respective moveable and non-moveable parts, even upon one of them moving relative to the other. Thus, in the case of a sealing member forming a primary component of a sealing arrangement to seal a gap between the two parts and also between the two pressure regions, an automatically self-centring mechanism tends to maintain the sealing member centrally or symmetrically within the gap, even upon movement of one of the members relative to the other, thereby enables the sealing member to "follow" any such relevant movement and thereby maintain an optimum seal by maintain a minimum clearance gap on both sides of the sealing member at all times during use.

One known proposal for such a self-centring seal is disclosed in our prior US Patent no. US 7249769B2, an example of which is shown in Figure 2(a) of the accompanying drawings. As shown there conceptually, a seal arrangement 40', such as that between a high pressure zone 60' and a low pressure zone 62' and between a static structure 52', e.g. a portion of a gas turbine engine casing, and a rotating structure 42', e.g. a turbine shaft, comprises a support member 44' carried on the shaft 42' which supports a radial sealing fin 46'. The sealing fin 46' is mounted between two magnetic rings 48', 50' which are arranged to repel one another. The magnetic rings 48', 50' are connected together via a yoke 54' which is flexibly attached to the casing 52' by one or more leaf springs 56' which allow the magnetic rings 48', 50', via their yoke 54', to move with respect to the rotating sealing fin 46'. A second seal 64' comprising a second sealing fin 66' is provided between the engine casing 52' and one of the magnetic rings 50' for controlling the pressure distribution around the seal arrangement 40'. The sealing fin 46' is manufactured from a conducting material and is normally positioned at the mid-point between the two magnetic rings 48', 50'. As the sealing fin 46' is manufactured to be thin, no flux is cut between the magnets 48', 50' and therefore no drag is generated when the sealing fin 46' is at the central position as shown. However, as the sealing fin 46' is displaced axially from its central position, e.g. upon axial movement of the rotating shaft 42', the magnetic flux is cut and a restoring force is generated. This restoring force urges the sealing fin 46' back into its centralised position between the magnetic rings 48', 50', thereby restoring the desired minimum clearance gaps between the sealing fin 46' and each of the magnetic rings 48' 50'.

Another known proposal for a purportedly self-centring seal is disclosed in published US Patent Application no. US 2009/0212501A1 (United Technologies Corp.), and is shown in Figure 2(b) of the accompanying drawings. As shown there, face seal assembly 10" incorporates opposing face seals 12" and 14" which are formed by portions of a stationary stator assembly 16" and a portion of a rotating rotor assembly 18", the latter comprising a seal runner 20" having opposite faces 42", 44". The face seal 12", which is carried by a carrier member 26", includes a seal-forming seal face 32", and the face seal 14", which is carried by a carrier member 28", includes a seal-forming seal face 34". A biasing spring 50" biases the carrier members 26", 28" together to establish a defined clearance between the seal faces 32", 34", in order to maintain a desired pressure differential between a high-pressure side ($P_{HIGH}$) and a low-pressure side ($P_{LOW}$) of the seal assembly. Additionally, a secondary seal 52", e.g. a piston ring, is provided to control gas leakage between an arm 22", which forms part of the stator assembly 16", and the carrier 24". In a similar manner to the self-centring seal of US7249769B1 above, the carrier member 26" is axially translatable so that seal face 32" can move, with carrier member 26", away from or towards face 42" of the seal runner 20". Similarly, carrier member 28" is axially translatable so that seal face 34" can move, with carrier member 28", away from or towards face 44" of the seal runner 20". In operation, the action of oppositely directed respective pneumatic forces generated between the seal face 32" and seal runner face 42" and between the seal face 34" and seal runner face 44" results in the sealing faces 32" and 34" being urged in opposite directions towards the seal runner 20", thereby centring the seal runner 20" between the opposing seal faces 42", 44" and thus establishing the desired sealing between the low-pressure side ($P_{LOW}$) and the high-pressure side ($P_{HIGH}$) of the seal assembly 10".

During our investigations into the operation and efficacy of known designs of self-centring seal arrangements such as those discussed above, we have found that in practice many of the known examples of self-centring seal arrangements are far from ideal, and often have only limited efficacy in actually providing the self-centring capability that is sought. For example, the use of magnets may not be suitable for certain engine environments, e.g. in particularly high temperature regions. Moreover, in the case of the seal arrangement disclosed in US 2009/0212501A1, the location of the secondary seal (52") leads to a failure of the arrangement to properly self-centre. Furthermore, many of the known arrangements are mechanically relatively complex, requiring very precise configurations of many highly-engineered components, which diminishes their cost-effectiveness.

It is therefore a primary object of the invention of this disclosure to provide mechanically effective and cost-effective sealing arrangements which are suitable for use in a wide variety of engine environments, and in particular which are more highly effective in actually providing a self-centring capability during use.

SUMMARY OF THE INVENTION

The present invention provides a sealing arrangement according to the appended claims.

Accordingly, aspects of the present disclosure relate to a sealing arrangement, a sealing apparatus, a gas turbine engine including the sealing arrangement or sealing apparatus, and a method of forming a seal between two components (or structures) and/or two pressure regions within an engine.

Disclosed is a sealing arrangement for providing sealing between a first structure and a second structure of an engine, and between first and second pressure regions located between the first and second structures, the first pressure region being at a relatively higher pressure than the second pressure region, and the first structure being moveable relative to the second structure along an axis, wherein the sealing arrangement comprises: a sealing member carried on the first structure and extending towards the second structure, and having opposite first and second sides; and a rigid frame mounted on the second structure so as to be translatable relative thereto in a direction substantially parallel to the said axis, the frame comprising:

a first seal portion having opposite exterior and interior sides and a first seal face on the interior side thereof, at least a portion of the first seal face being in communication with the first pressure region, and a second seal portion spaced from the first seal portion and having opposite exterior and interior sides and a second seal face on the interior side thereof, at least a portion of the second seal face being in communication with the second pressure region, the first and second seal faces being spaced apart from one another with the first seal face located to the first side of the sealing member and the second seal face located to the second side of the sealing member, and the frame being configured and arranged such that the exterior sides of the first and second seal portions of the frame are substantially pressure-balanced relative to each other; wherein: the first seal face of the first seal portion of the frame and the first side of the sealing member are configured to form a first pressure reduction zone, and the second seal face of the second seal portion of the frame and the second side of the sealing member are configured to form a second pressure reduction zone, and at least a portion of the first pressure reduction zone is located relatively distal, in a direction substantially normal to the said axis, from the first structure and at least a portion of the second pressure reduction zone is located relatively proximal, in a direction substantially normal to the said axis, to the first structure, whereby the frame is translatable relative to the second structure in the said direction substantially parallel to the said axis in response to relative movement of the first structure along the said axis.

As used herein the term "structure" is to be construed broadly as meaning any structure or structural component which is present within or forms a part or portion of an engine or any component feature of an engine, e.g. a gas turbine engine. Accordingly, the terms "structure" and "component" may, in this context, be used interchangeably, unless the contrary is expressly stated or obviously applies.

As used herein the expression "pressure-balanced" (or linguistic equivalents thereof), as applied to the frame, means that the exterior sides of the first and second seal portions of the frame, i.e. those sides opposite the sides thereof having the first and second seal faces, have in use a substantially or approximately zero net load across them in a direction substantially parallel to the said axis when the sealing member is in its equilibrium centred position between the first and second seal faces. It is furthermore to be understood that this "equilibrium centred position" means that equilibrium position at which there is substantially no net force exerted on or by the sealing member in either direction parallel to the said axis, i.e. it is a "force-centred" equilibrium position, and may not necessarily be or correspond to a geometrically centred or geometric median position between the first and second seal faces.

The feature of the exterior sides of the first and second seal portions of the frame may be substantially pressure-balanced relative to each other may be provided for or achieved at least in part by virtue of either:

(i) the exterior side of the second seal portion of the frame being in fluid communication with the first pressure region and sealed from the second pressure region, or (ii) the exterior side of the first seal portion of the frame being in fluid communication with the second pressure region and sealed from the first pressure region.

A secondary seal device may be provided for effecting such a sealing of the exterior side of the second (or alternatively the first, as the case may be) seal portion from the first (or alternatively the second, as the case may be) pressure region, such that the exterior sides of the first and second seal portions of the frame are substantially pressure-balanced relative to each other. In this case the secondary seal may seal a fluid communication route between the first and second pressure regions via the exterior sides of the first and second seal portions of the frame.

A sealing arrangement for providing sealing between a first structure and a second structure of an engine, and between first and second pressure regions located between the first and second structures, the first pressure region being at a relatively higher pressure than the second pressure region, and the first structure being moveable relative to the second structure along an axis, may comprise: a sealing member carried on the first structure and extending towards the second structure, and having opposite first and second sides; a rigid frame mounted on the second structure so as to be translatable relative thereto in a direction substantially parallel to the said axis. The frame may comprise: a first seal portion having opposite exterior and interior sides and a first seal face on the interior side thereof, at least a portion of the first seal face being in communication with the first pressure region, and a second seal portion spaced from the first seal portion and having opposite exterior and interior sides and a second seal face on the interior side thereof, at least a portion of the second seal face being in communication with the second pressure region, the first and second seal faces being spaced apart from one another with the first seal face located to the first side of the sealing member and the second seal face located to the second side of the sealing member; and a secondary seal device arranged for sealing a fluid communication route between the first and second pressure regions via the exterior sides of the first and second seal portions of the frame, the secondary seal device being located either to the exterior side of the first seal portion or to the exterior side of the second seal portion and at a distance, in a direction substantially normal to the said axis, such as to substantially pressure-balance the exterior sides of the first and second seal portions of the frame relative to each other, wherein: the first seal face of the first seal portion of the frame and the first side of the sealing member are configured to form a first pressure reduction zone, and the second seal face of the second seal portion of the frame and the second side of the sealing member are configured to form a second pressure reduction zone, and at least a portion of the first pressure reduction zone is located relatively distal, in a direction substantially normal to the said axis, from the first structure and at least a portion of the second pressure reduction zone is located relatively proximal, in a direction substantially normal to the said axis, to the first structure, whereby the frame is translatable relative to the second structure in the said direction substantially parallel to the said axis and in response to relative movement of the first structure along the said axis.

The above-defined secondary seal device may be located at any suitable distance, in a direction substantially normal to the said axis (along which the first structure is movable relative to the second structure), effective to substantially pressure-balance the exterior sides of the first and second seal portions of the frame relative to each other. That location of the secondary seal device may be intermediate the relatively distal and the relatively proximal radial locations, relative to the first structure, of the respective portions of the first and second pressure reduction zones. In practical terms this location "intermediate the relatively distal and the relatively proximal radial locations of the respective portions of the first and second pressure reduction zones" of the secondary seal device, may mean a location which is intermediate, in the said direction substantially normal to the said axis, between respective central points or median axes on the respective first and second pressure reduction zones.

The location of the secondary seal device may for example be substantially equidistant, in the said direction substantially normal to the said axis, between the first and second pressure reduction zones, or - more strictly - the respective central points or median axes thereon. However, the location of the secondary seal device may possibly be other than equidistant between the respective pressure reduction zones, or central points/axes thereon, for example depending on the specific pressure balancing requirements, or the specific relative configuration of the first and second seal portions, of the overall sealing arrangement.

The secondary seal device may, if desired or convenient, be provided on, or at least in part be mounted or carried or formed on or by, a portion of the frame. Alternatively or additionally, the secondary seal device may, if desired or convenient, at least in part be provided on, or at least in part be mounted or carried or formed on or by, a mounting portion of the second structure which extends therefrom towards the first structure.

The secondary seal device may be of any suitable known seal type. For example, the secondary seal device may comprise at least one brush seal, leaf seal, finger seal, labyrinth seal, piston ring, split ring seal, carbon seal, lip seal, or any other suitable type of compliant or resilient contacting seal.

The first structure may be an engine component or structural element which is rotatable about the said axis, or about a rotational axis parallel to the said axis, along which it is axially movable relative to the second structure. In the context of a gas turbine engine, such a first structure may typically comprise at least a portion of a rotatable shaft, such as a shaft of a high pressure, intermediate pressure or low pressure turbine, or a shaft or carrier or carrier segment which carries or supports one or more turbine blades. In general terms, the first structure may comprise any engine component or structural element, whether or not rotatable about a rotational axis, which typically when in use undergoes or has a tendency to undergo relative movement, especially movement over significant or relatively large distances, relative to the second structure at least along the said axis.

The sealing member carried on the first structure, e.g. a rotatable shaft, extends towards the second structure, e.g. part of an engine casing, may be a direction substantially normal to the said axis (along which the first structure is moveable relative to the second structure), i.e. that direction may be a generally radial direction normal or perpendicular to the said axis.

However it may be possible for the direction in which the sealing member extends towards the second structure to be a direction at a non-right angle relative to the said axis, e.g. at an angle in an approximate range of from about 0° up to about 60° or 70° or 80° or 85° or even about 89° relative to the said axis.

The said axis along which the first structure may be moveable relative to the second structure may be coincident with or parallel to a central axis of an overall engine, e.g. a gas turbine engine, in which the sealing arrangement is incorporated.

The second structure may be an engine component or structural element which is non-rotatable about, especially substantially or approximately static relative to, the said axis (along which the first structure is moveable relative thereto), or a rotational axis parallel to the said axis. In the context of a gas turbine engine, such a second structure may typically comprise a portion of the engine casing, or alternatively a portion of a support or a mounting structure which is used to anchor one or more components within the engine architecture.

The sealing arrangement may serve as a sealing arrangement or device between first and second pressure regions which each independently contain or comprise a gas or, in some cases, a liquid. In many practical cases at least one of the pressure regions may contain or comprise a gas, e.g. air, at a pressure typical of an engine operating condition for that region therewithin. Typically both the first and the second pressure regions may contain a gas, e.g. air, with the air pressure in the first pressure region being higher, often significantly or substantially higher, than the air pressure in the second pressure region. Thus, in a typical practical example the first pressure region may be a "high pressure" (HP) region within a gas turbine engine and the second pressure region may be a "low pressure" (LP) region within such an engine. However, at least one of the first and second pressure regions may alternatively contain or comprise a pressurised liquid, e.g. an oil or other fluid.

It is a particular feature of the sealing arrangement that it is in effect a self-centring sealing arrangement, which is to say that any movement of the first structure, e.g. a rotatable shaft of some kind, relative to the second structure, e.g. part of an engine casing, along the said axis results in a restorative axial force being exerted on the first or second seal portions of the frame such that the frame is urged to follow and replicate that axial movement, thereby tending to restore the sealing member carried on the first structure into its equilibrium centred position between the first and second seal faces of the frame. This self-centring action is a valuable advantage, as it may serve to maximise or optimise the overall sealing efficiency of the arrangement as between the first and second structures and between the first and second pressure regions. At the same time, it may minimise or ameliorate leakage of pressurised fluid through unduly or unnecessarily large clearance gaps within the arrangement that would otherwise typically often occur during normal use of the engine as a result of such axial movements of the first and second structures relative to each other caused by typical operating loads on the various engine components. The physical mechanism by which this self-centring phenomenon occurs is discussed in detail further hereinbelow.

The self-centring sealing arrangements may be put to effective use in a wide variety of engine environments. Since the self-centring functionality of the sealing arrangement does not necessarily require the seal to be annular (although it may be), or necessarily require the sealing member actually to rotate (since the invention is applicable to a rotationally static sealing member) (although it may so rotate), it may be used in engine locations where positional control is required yet where the environment may be too extreme for a conventional feedback control system with actuators and sensors. This application may thus be useful as a sealing arrangement for a valve or a regulator or a positional controller in a harsh environment where there is a fluid pressure drop present between discrete regions and between which sealing is thus required. Stator well sealing, as well as bearing chamber sealing, in a gas turbine engine are other practical examples of the seal arrangements utility.

In the sealing arrangement, the frame is defined as a rigid frame, meaning that it is substantially rigid or has a degree of rigidity or structural integrity such that a loading force exerted on or by one of the first and second seal portions, especially on or by an exterior side of one of the first and second seal portions, can be transmitted to, or is transmittable to, the other of the first and second seal portions. Such transmission of loading force(s) may preferably occur substantially without any, or any significant or substantial, deformation or variation in the shape and/or configuration of the frame, such that a loading force exerted on or by either one of the first and second seal portions may be transmissible to the other one of the first and second seal portions substantially without any, or any significant or substantial, change in the relative spatial configurations of the first and second seal portions, especially substantially without any, or any significant or substantial, change in the relative spacing between the interior sides of the first and second seal portions.

The frame may define a chamber, e.g. a chamber internally of the frame, in fluid communication with at least a portion of each of the first and second seal faces of the first and second seal portions, which chamber has an intermediate pressure which is intermediate the pressures of the first and second pressure regions. Such portions of each of the first and second seal faces (which are in fluid communication with the intermediate chamber) may be at least in part the same as or a continuation of or in fluid communication with the portions of the first and second seal faces which are in fluid communication with, respectively, the first and second pressure regions.

Such an intermediate pressure chamber, which may be thought of as an intermediate "buffer" pressure zone between the first and second pressure regions, may thus serve to enable a pressure differential to be created and to be maintained as between a relatively high pressure at or on at least a portion of the first seal face of the first seal portion and a relatively low pressure at or on at least a portion of the second seal face of the second seal portion, regardless of the size of any gaps between, respectively, the first seal face and the first side of the sealing member, and the second seal face and the second side of the sealing member, during a self-centring operation or movement of the arrangement.

An intermediate pressure chamber may be substantially sealed from each of the first and second pressure regions, except for any degree or extent of its fluid communication with either thereof via the above-mentioned portions of the first and second seal faces of the first and second seal portions.

In use, the value of the intermediate pressure of the intermediate pressure chamber may be automatically self-regulated by the respective values of, or the pressure differential between, the relatively high and relatively low pressures of the first and second pressure regions. Moreover, the magnitude of the intermediate pressure may not be critical to, or may not even have a material functional effect on, the effective operation of the intermediate pressure chamber in the overall self-centring functioning of the sealing arrangement.

An intermediate pressure chamber may extend circumferentially, and may be substantially compartmentalised circumferentially by the provision therein of one or more, especially or optionally a plurality of, baffle or divider elements extending into the intermediate pressure chamber. It is to be understood that such baffle or divider elements (or "pockets") may function to restrict the circumferential flow in the intermediate pressure chamber, so that the local intermediate pressure therein is dominated by the local seal clearances at the seal faces of the sealing arrangement. This may be true whether the arrangement in the form of a ring is fully annular or segmented (see hereinbelow for more discussion about this optional feature). Otherwise, the intermediate pressure chamber pressure may be an integral function of all the individual seal clearances at the individual seal faces and this may not allow for once per revolution distortions therein.

The frame may be mounted on the second structure so as to be translatable relative thereto in a direction substantially parallel to the said axis (along which the first structure is moveable relative to the second structure). By "translatable" is meant moveable such that every point on the frame moves, relative to the second structure, parallel to and the same distance as every other point on the frame. Any suitable mounting arrangement, via which the frame may be mounted directly or indirectly on or with respect to the second structure, may be employed for this purpose.

The frame may be mounted on the second structure by a slider mechanism, that is to say a mechanism which is constructed and arranged or configured to permit relative translational movement between the frame and the second structure at least in the said direction substantially parallel to the said axis. Any suitable mechanical slider mechanism, device or arrangement may be used for this purpose, examples of which are well known in the engineering art, such as in engine designs in which one or more components may need to be arranged to be slidable relative to one or more other components. Specific examples of suitable slider arrangements or other mounting arrangements via which the frame is mounted, either directly or indirectly, on the second structure, will be described hereinbelow.

Of course, in certain practical example arrangements it may be possible for the mounting of the frame on or with respect to the second structure to permit one or more other degrees of freedom of relative movement, e.g. rotational or pivoting movement, possibly only by relatively small amounts, of the frame other than the defined translational relative movement in the said direction substantially parallel to the said axis.

The slider mechanism via which the frame may be mounted on the second structure may optionally include one or more tertiary seal devices for substantially preventing leakage of fluid, especially air, from the first pressure region to the second pressure region, especially through the said slider mechanism. The or each such tertiary seal device may comprise any suitable number and type of seal(s), e.g. at least one brush seal, leaf seal, labyrinth seal or piston ring-type seal.

If desired or necessary the slider mechanism via which the frame may be mounted on the second structure may optionally include at least one damper mechanism to help regulate the relative translational movement of the frame relative to the second structure, and especially to prevent or ameliorate any tendency for oscillations in that relative movement to occur. Such a damper mechanism may for example comprise one or more springs or one or more dashpots or hydraulic devices, specific practical examples of which types of damper mechanism are well known in the art.

Alternatively or additionally to the above damper mechanism associated with the slider mechanism used to mount the frame to the second structure, in certain examples of the sealing arrangement any overall damping mechanism for assisting in accommodating especially large axial movements of the first structure carrying the sealing member relative to the second structure, and especially to help prevent, ameliorate or resist oscillations in such axial movement occurring, may be constituted by or contributed to by virtue of an inherent property or component of a particular embodiment means of providing the respective pressure reduction zones, such as by use of respective brush seals or other compliant, flexible or resilient contact-type sealing devices to define respective constrictions in the clearance gaps which lead to the creation of the said pressure reduction zones. Some specific examples of such an arrangement will be described hereinbelow and in conjunction with certain ones of the accompanying drawings.

Further alternatively or additionally, it may be possible for the inherent structure, configuration and/or positioning of the secondary seal device itself to provide it with some damping effect on the relative axial movement of the frame.

The seal portions of the frame may be positioned generally substantially opposite each other on either side of the sealing member at a substantially equal or common distance, in a direction substantially normal to the said axis, from that axis.

However, the seal portions of the frame may be positioned generally offset with respect to each other on either side of the sealing member at respectively different distances, in a direction substantially normal to the said axis, from that axis.

The first seal face of the first seal portion and the first side of the sealing member may be separated by a first clearance gap, and the second seal face of the second seal portion and the second side of the sealing member may be separated by a second clearance gap. The first clearance gap may contain or accommodate the first pressure reduction zone formed by the first seal face and the first side of the sealing member, and the second clearance gap may contain or accommodate the second pressure reduction zone formed by the second seal face and the second side of the sealing member.

The first and second clearance gaps may be non-uniform in width, such that the width of each respective clearance gap changes or varies along a longitudinal dimension perpendicular to its width. Accordingly, each of the first and second clearance gaps may generally be of varying or non-uniform size and/or shape and/or dimensions and/or configuration along a longitudinal dimension perpendicular to its width, especially depending on the respective size and/or shape and/or dimensions and/or configuration of the respective pressure reduction zone itself which is formed or accommodated therein.

In general it may be desirable for a minimum or an average width of each of the first and second clearance gaps, or a width of a portion of each of the first and second clearance gaps in which its width is at its smallest compared with other portion(s) thereof, to be arranged to be as small as is practicable or feasible when the sealing member is in its centred equilibrium position between the first and second seal portions of the frame, taking into account any necessary or inevitable or desirable degree of freedom of movement along the said axis which the sealing member may have (or possibly even may be designed to have) when positioned between the first and second seal portions of the frame and in use.

A key feature of the sealing arrangements is the first and second pressure reduction zones formed by and/or between, respectively, the first seal face and the first side of the sealing member, and the second seal face and the second side of the sealing member. At least a portion of the first pressure reduction zone, and in some examples optionally at least a major portion thereof, is located relatively distal, in a direction substantially normal to the said axis, from the first structure, and at least a portion of the second pressure reduction zone, and in some examples optionally at least a major portion thereof, is located relatively proximal, in a direction substantially normal to the said axis, to the first structure. Thus, in general in examples of the sealing arrangement it is the pressure reduction zone that is at least partially in communication with the first, i.e. relatively high pressure, pressure region which is the one that is located the relatively more distal, in a direction substantially normal to the said axis, from the first structure.

The first and second pressure reduction zones formed by and/or between, respectively, the first seal face and the first side of the sealing member, and the second seal face and the second side of the sealing member, may each independently take a wide variety of possible forms, shapes, configurations and/or geometries. However, in many examples the first and the second pressure reduction zones may be geometrically identical or similar but reversed in orientation (or possibly rotated through 180°) relative to each other on the opposite sides of the sealing member, whilst in all events being displaced relative to one another in the relatively distal (being the at least a portion of the first pressure reduction zone) and relatively proximal (being the at least a portion of the second pressure reduction zone) manner, relative to the first structure, defined hereinabove.

The first and second pressure reduction zones may be constructed and/or arranged so that their respective general longitudinal directions are substantially parallel to each other on the opposite sides of the sealing member. However, the first and second pressure reduction zones may be constructed and/or arranged so that their respective general longitudinal directions are substantially non-parallel, i.e. angled with respect to each other, e.g. by an angle in the approximate range of from about 5 or 10 or 20 or 30° to about 50 or 60 or 70 or 80°) on the opposite sides of the sealing member. In such non-parallel cases, the respective general longitudinal directions of the first and second pressure reduction zones may be arranged symmetrically with respect to each other on the opposite sides of the sealing member.

Generally, the first pressure reduction zone may be constructed and/or configured such that, in use, a reduction in fluid pressure occurs therealong, going in a direction from a portion of that zone proximal to the first (i.e. relatively high) pressure region to a portion thereof distal from the first (i.e. relatively high) pressure region. Likewise, generally, the second pressure reduction zone may be constructed and/or configured such that, in use, a reduction in fluid pressure occurs therealong, going in a direction from a portion of that zone distal from the second (i.e. relatively low) pressure region to a portion thereof proximal to the second (i.e. relatively low) pressure region. In many practical examples the above-defined respective directions of pressure reduction along the respective first and second zones may be oriented oppositely relative to each other on the opposite sides of the arrangement to either side of the sealing member.

A reduction in fluid pressure along each zone may be a substantially continuous or uniform or constant pressure reduction (with respect to longitudinal distance) going in the respective said direction along the respective zone. However, in other examples such a reduction in fluid pressure may be non-continuous or non-uniform or non-constant going in that respective said direction along the respective zone. For instance, in such other examples such a reduction in fluid pressure may vary incrementally or in a stepwise fashion or may occur in discrete stages, or may even be periodically or intermittently interrupted, going in that respective said direction along the respective zone.

In view of the above, each of the first and second pressure reduction zones may be designed with any of a variety of different forms, shapes, configurations and/or geometries. For example:

Each of the first and second pressure reduction zones may, respectively, comprise at least one first subzone defining a first clearance gap between the relevant seal face and the relevant side of the sealing member, and at least one second subzone defining a second clearance gap between the relevant seal face and the relevant side of the sealing member, wherein the first clearance gap is larger than the second clearance gap. Thus, passing longitudinally along the zone from the first subzone (with larger clearance gap) to the second subzone (with smaller clearance gap) results in a reduction of fluid pressure in the latter as compared with in the former, thereby creating the respective pressure reduction zone in passing from the respective first subzone to, and along, the respective second subzone. The mechanism by which this phenomenon occurs is described and discussed further hereinbelow.

The first and second subzones of each pressure reduction zone may be defined or formed or delimited by virtue of at least one of the relevant seal face and relevant side of the sealing member being configured with at least one step therein. Optionally each portion of the relevant seal face and/or relevant side of the sealing member to either longitudinal end of the step may comprise a respective generally substantially planar portion thereof. The respective plane of the or each respective substantially planar portion may or may not be substantially parallel to the general longitudinal direction of the relevant overall pressure reduction zone. The height of the relevant step (in a direction perpendicular to the longitudinal direction of the relevant zone) may be selected or adjusted to provide any desired or appropriate degree of pressure reduction along the relevant pressure reduction zone when in use. The step may be provided or formed in the relevant seal face itself, or alternatively the step may be provided or formed in the relevant side of the sealing member. Further alternatively, the step may be formed by respective step portions provided or formed in both of the relevant seal face and relevant side of the sealing member.

In examples comprising at least one step feature to define or delimit the subzones of each respective pressure reduction zone, the step may be either a "full" step (that is to say, in which material may in effect be thought of as having been removed from the respective seal face to a required height and to a "complete" circumferential (relative to the axial direction) extent so as to define a full step width across the required circumferential distance) or a "partial" step (that is to say, in which material may in effect be thought of as having been removed from the respective seal face to a required height and in only one or more selected circumferential regions or areas). In examples of the "full step" kind, the step feature may thus be in the form of a simple step, optionally incorporating a ramp or wedge portion, and in examples of the "partial step" kind, the step feature may be in the form of one or more, often a plurality of, cut-outs, channels or slots formed in the relevant seal face or subface. Various specific examples of such full-step and partial-step features will be described further below, by way of example only, in conjunction with the accompanying drawings.

As an alternative to a step, the first and second subzones of each pressure reduction zone may be defined or formed or delimited by a partitioning or bridging portion. Such a partitioning or bridging portion may be of any suitable shape and/or configuration. Suitable such shapes and/or configurations may include for example any of the following: a planar portion of increased or reduced transverse width, a ramp, a curved portion (either convexly or concavely curved), a portion formed with or as one or more teeth (e.g. of rectangular, triangular or other polygonal or rounded or curved cross-section), a portion formed with or as at least one protruding shoulder (e.g. of generally rectangular cross-section), a portion formed with or as a wave-like or undulating surface contour, or a portion formed with or as a surface shape defined by any suitable mathematical function (e.g. a smoothly varying contour being a portion or segment of a circle, ellipse, parabola, hyperbola, or a complex curve combining any of the aforesaid functions).

In other forms, each of the first and second pressure reduction zones may, respectively, comprise a clearance gap between the relevant seal face and the relevant side of the sealing member which varies, especially continuously varies, in width passing longitudinally therealong. Thus, in such examples there may not be a distinct boundary or partition between or defining discrete subzones within the relevant pressure reduction zone, so that the relevant zone is or comprises a substantially single region of varying geometry therealong for providing the relevant pressure reduction characteristics as one passes along it.

Accordingly, such a varying width of clearance gap may be a substantially continuous or uniform or constant (with respect to longitudinal distance) change in the clearance gap width as one passes longitudinally along the relevant zone. Alternatively such a varying width of clearance gap may be non-continuous or non-uniform or non-constant passing along the relevant zone, e.g. the clearance gap may vary at different rates passing along the relevant zone. Such a varying clearance gap may be achieved by virtue of at least a portion of the relevant seal face being shaped accordingly, or by virtue of at least a portion of the relevant side of the sealing member being shaped accordingly, or even by virtue of both of the relevant seal face and the relevant side of the sealing member being shaped accordingly.

In such examples comprising a clearance gap of varying width therealong, that variation in width may occur at least when passing in a longitudinal direction along the relevant zone. Additionally, that variation in width may occur also when passing in a direction perpendicular to that said longitudinal direction across the relevant zone. Thus, such a variation in width of the relevant clearance gap may occur either in one dimension only (i.e. in a longitudinal direction only), or optionally it may occur in two dimensions simultaneously (i.e. in both longitudinal and transverse directions) such as to give a more complex shape to the overall relevant zone geometry.

Thus, the configuration of the respective clearance gaps which define the respective first and second pressure reduction zones may be such as to include at least one constriction or constriction portion in the said respective clearance gap. One or more, possibly even a plurality of, such constrictions or constriction portions may be employed for this purpose. Practical example forms of such constrictions or constriction portions include for example one or more knife or teeth portions, fins, ridges or lip portions, noses or shoulder portions, and suchlike, or even one or more brush seals or other compliant, flexible or resilient contact-type sealing devices.

It may be possible for each of the relevant pressure reduction zones to be formed with a combination of any of the above-defined types of features, that is to say, a combination of both (i) discrete first and second subzones defined or delimited by a step or a partitioning or bridging portion, and (ii) a general width of clearance gap which varies along the length thereof or along one or more discrete subzones thereof or contains one or more constrictions therein.

Some specific examples of various geometries, configurations and/or constructions of pressure reduction zones which may be employed in various examples of sealing arrangements within the scope of the invention will be described further below, by way of example only, in conjunction with the accompanying drawings.

In addition to the basic configuring of the respective seal faces of the frame and/or the sides of the sealing member to form the requisite respective pressure reduction zones, it may be possible to further modify the configuration of any of those components or features in order to optimise the manner of fluid flow across the surfaces thereof. Accordingly, it may be possible to incorporate into either at least one of (or optionally both of) the seal faces of the frame or the sides of the sealing member, or possibly both of these, one or more fluid flow-optimising features. Such fluid flow-optimising features may preferably be such as to enhance the "stiffness" of the fluid film passing over the surface(s) of the arrangement. Such one or more fluid flow-optimising features may comprise one or more fluid-riding (especially air-riding, in the case of the fluid being air) features, such as any suitable number and configuration of steps, ramps, wedges, ribs, fins, protrusions, grooves, channels, slots, or other like formations. Any such formations may be provided or formed in or on the respective seal face(s) it/themselves or in or on the side(s) of the sealing member, or even possibly on both of these. Some specific examples of geometries, configurations and/or constructions of various such fluid-riding or other flow-optimising features which may be employed in various examples will be described further below, by way of example only, in conjunction with the accompanying drawings.

The sealing arrangement may be manufactured or assembled by any appropriate manner of bringing together and mutual mounting and/or assembling of the various components, as will be readily apparent and practisable by persons skilled in the art. For instance, the frame of the arrangement may be made as discrete halves or other plural sections of a whole, e.g. split into plural portions corresponding at least to upstream and downstream portions, with those halves or sections being (i) assembled into the final complete frame structure, and (ii) mounted on the translational slider or other axial movement mechanism as it is mounted to either side of the sealing member carried on the rotor or other rotatable first structure. Other manners of manufacture and assembly of the component parts of the arrangements may of course be possible.

There may be provided a sealing apparatus comprising one or more sealing arrangements as disclosed.

A sealing apparatus may comprise any suitable or desired number, configuration and spatial arrangement of one or more such sealing arrangements. For example, such a sealing apparatus may comprise one or more such sealing arrangements which have an arcuate form or extent such as to form at least a segment of a circle, annulus or other curve, for example such that that circle, annulus or curve is centred upon, or lies in a plane normal to, an axis which is coincident with or parallel to the said axis along which the first structure is moveable relative to the second structure. Thus, in some examples that arcuate or annular (or part-annular) form or extent may be such as to constitute a sealing arrangement for providing sealing between an arcuate, annular (or part-annular), curved or segmented first structure and an arcuate, annular (or part-annular), curved or segmented second structure.

An arcuately extending or curved sealing arrangement may even constitute substantially an entire circle, annulus or other closed curve, so that the sealing arrangement substantially completely surrounds or encloses the said axis.

A plurality of such sealing arrangements may be provided, optionally collectively comprising a plurality of discrete frames or discrete segments of an overall arcuate, annular or curved frame structure. In such examples the plurality of sealing arrangements may share a common or singular sealing member, especially a sealing member in the form of an annulus, which may thus be carried on a common or singular first structure, especially a common or singular first structure about which the overall, e.g. segmented, sealing arrangement is disposed.

A gas turbine engine may include one or more of the disclosed sealing arrangements or sealing apparatuses.

Also disclosed is a method of forming a seal between two structures or components and two pressure regions within an engine by use of a sealing arrangement or a sealing apparatus.

Thus, more particularly, there may be provided a method of providing sealing between a first structure and a second structure of an engine, and between first and second pressure regions located between the first and second structures, the first pressure region being at a relatively higher pressure than the second pressure region, and the first structure being moveable relative to the second structure along an axis, wherein the method comprises: providing a sealing arrangement comprising: a sealing member carried on the first structure and extending towards the second structure, and having opposite first and second sides; and a rigid frame mounted on the second structure so as to be translatable relative thereto in a direction substantially parallel to the said axis, the frame comprising: a first seal portion having opposite exterior and interior sides and a first seal face on the interior side thereof, at least a portion of the first seal face being in communication with the first pressure region, and a second seal portion spaced from the first seal portion and having opposite exterior and interior sides and a second seal face on the interior side thereof, at least a portion of the second seal face being in communication with the second pressure region, the first and second seal faces being spaced apart from one another with the first seal face located to the first side of the sealing member and the second seal face located to the second side of the sealing member, and the frame being configured and arranged such that the exterior sides of the first and second seal portions of the frame are substantially pressure-balanced relative to each other; wherein: the first seal face of the first seal portion of the frame and the first side of the sealing member are configured to form a first pressure reduction zone, and the second seal face of the second seal portion of the frame and the second side of the sealing member are configured to form a second pressure reduction zone, and at least a portion of the first pressure reduction zone is located relatively distal, in a direction substantially normal to the said axis, from the first structure and at least a portion of the second pressure reduction zone is located relatively proximal, in a direction substantially normal to the said axis, to the first structure; and operating the said engine, whereby any relative movement of the first structure relative to the second structure along the said axis results in corresponding translational movement of the frame relative to the second structure in the said direction substantially parallel to the said axis.

Thus, any translational movement of the frame relative to the second structure may be responsive to any relative movement of the first structure relative to the second structure along the said axis. Such a responsive arrangement may thus preferably be or constitute a self-centring sealing arrangement.

Within the scope of this application it is expressly envisaged that the various aspects, embodiments, examples and alternatives, and in particular the individual features thereof, set out in the preceding paragraphs, in the claims and/or in the following description and drawings, may be taken independently or in any combination. For example, feature(s) defined or described in connection with one embodiment and/or aspect are applicable to any and all embodiments and/or aspects, unless expressly stated otherwise or such features are incompatible.

## BRIEF DESCRIPTION OF THE DRAWINGS

Embodiments of the present invention in its various aspects, as well as the physical principles which underpin the invention, will now be described in detail, by way of example only, with reference to the accompanying drawings, in which:

Figure 1 is a schematic cross-sectional representation of a known aircraft ducted fan gas turbine engine, illustrating its main component sections, and has already been described;

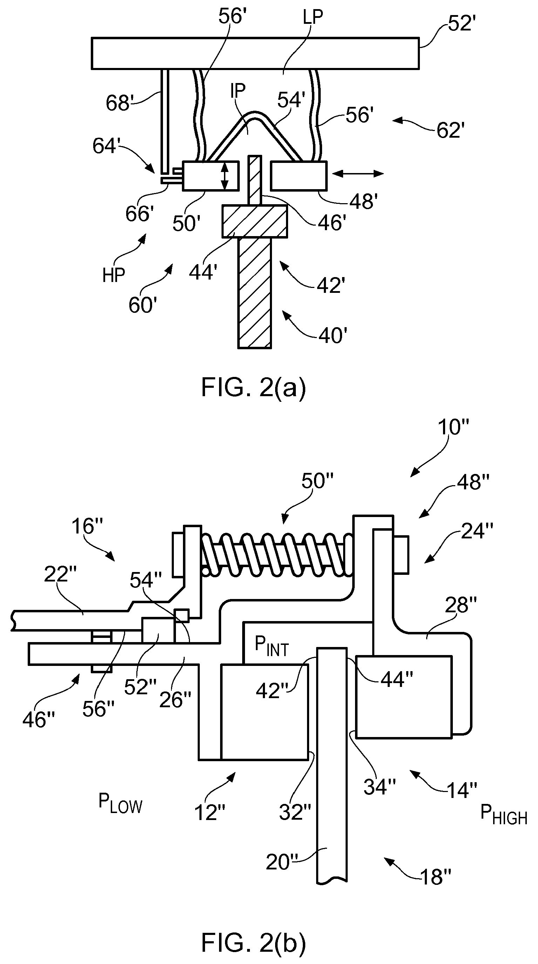

Figure 2(a) is a cross-sectional view of one example of a known sealing arrangement as disclosed in US 7249769B2, and has already been described;

Figure 2(b) is a cross-sectional view of another example of a known sealing arrangement as disclosed in US 2009/0212501A1, and has already been described;

Figure 3(a) is a schematic cross-sectional view of a basic sealing arrangement constituting a precursor to various embodiments of the invention, simplified for the purposes of explanation of the general concept of its operation, as discussed further below;

Figure 3(b) is a schematic cross-sectional view of a modified basic sealing arrangement corresponding closely to that Figure 3(a), and again constituting a precursor to various embodiments of the invention and merely for conceptual explanation only, showing an alternative positioning of the axial pressure-balancing secondary seal;

Figure 4 is a conceptual cross-sectional view of part of the basic precursor sealing arrangement of Figure 3(a), for the purpose of explanation of the general concept of the arrangement's axial pressure-balancing, as discussed further below;

Figure 5 is another conceptual cross-sectional view of part of the basic precursor sealing arrangement of Figure 3(a), corresponding to Figure 4, but conceptually modified for the purpose of further explanation of the general concept of the arrangement's axial pressure-balancing, as discussed further below;

Figure 6(a) is a cross-sectional view of part of a first example sealing arrangement in accordance with an embodiment of the invention, showing the sealing member in its centralised sealing position;

Figure 6(b) corresponds to Figure 6(a) and additionally shows graphs of the respective pressure profiles on each seal face of the respective seal portions of the frame;

Figure 6(c) is a cross-sectional view of part of the first example sealing arrangement as in Figure 6(b), but showing the arrangement and the respective pressure profiles of the seal faces in the case where the sealing member is shifted in an upstream axial direction relative to the frame;

Figure 6(d) is a cross-sectional view of part of the first example sealing arrangement as in Figure 6(b), but showing the arrangement and the respective pressure profiles of the seal faces in the case where the sealing member is shifted in a downstream axial direction relative to the frame;

Figure 6(e) corresponds to Figure 6(a) and shows the various geometrical and pressure parameters for the purpose of explanation of the general operation of this arrangement, as discussed further below, in which example the secondary seal is located to the LP side of the arrangement for explanatory purposes;

Figure 6(f) corresponds to Figure 6(a) and shows the various geometrical and pressure parameters for the purpose of explanation of the general operation of the arrangement, as discussed further below, but in which example the secondary seal is located to the HP side of the arrangement for explanatory purposes;

Figure 7(a) is a cross-sectional view of part of a second example sealing arrangement in accordance with an embodiment of the invention, showing the sealing member in its centralised sealing position;

Figure 7(b) corresponds to Figure 7(a) and shows the various geometrical and pressure parameters for the purpose of explanation of the general operation of this arrangement, as discussed further below;

Figure 8 is a cross-sectional view of part of a third example sealing arrangement in accordance with an embodiment of the invention, showing the sealing member in its centralised sealing position;

Figure 9 is a cross-sectional view of part of a fourth example sealing arrangement in accordance with an embodiment of the invention, showing the sealing member in its centralised sealing position;

Figure 10 is a cross-sectional view of part of a fifth example sealing arrangement in accordance with an embodiment of the invention, showing the sealing member in its centralised sealing position;

Figure 11 is a cross-sectional view of part of a sixth example sealing arrangement in accordance with an embodiment of the invention, showing the sealing member in its centralised sealing position;

Figure 12 is a cross-sectional view of part of a seventh example sealing arrangement in accordance with an embodiment of the invention, showing the sealing member in its centralised sealing position;

Figure 13 is a cross-sectional view of part of an eighth example sealing arrangement in accordance with an embodiment of the invention, showing the sealing member in its centralised sealing position;

Figure 14 is a cross-sectional view of part of a ninth example sealing arrangement in accordance with an embodiment of the invention, showing the sealing member in its centralised sealing position;

Figure 15 is a cross-sectional view of part of a tenth example sealing arrangement in accordance with an embodiment of the invention, showing the sealing member in its centralised sealing position;

Figure 16 is a multi-directional composite view of the geometry of each of the stepped seal faces of the embodiment sealing arrangement shown in principle in Figure 6(a);

Figure 17 is a multi-directional composite view of the geometry of one example of air-riding features which may be applied to the seal faces of the basic arrangement of Fig. 16 to further enhance its functionality;

Figure 18 is a multi-directional composite view of the geometry of another example of air-riding features which may be applied to the seal faces of the basic arrangement of Fig. 16 to further enhance its functionality;

Figure 19 is a multi-directional composite view of the geometry of another example of air-riding features which may be applied to the seal faces of the basic arrangement of Fig. 16 to further enhance its functionality;

Figure 20 is a multi-directional composite view of the geometry of another example of air-riding features which may be incorporated into the seal faces of the basic arrangement of Fig. 16 to further enhance its functionality;

Figure 21 is a multi-directional composite view of the geometry of each of the seal faces of another embodiment sealing arrangement within the scope of the invention, in which a modified form of step-introducing feature is employed;

Figure 22 is a multi-directional composite view of the geometry of each of the seal faces of yet another embodiment sealing arrangement within the scope of the invention, in which another modified form of step-introducing feature is employed;

Figure 23 is a multi-directional composite view of the geometry of each of the seal faces of still yet another embodiment sealing arrangement within the scope of the invention, in which yet another modified form of step-introducing feature is employed;

Figure 24 is a multi-directional composite view of the geometry of each of the seal faces of yet a further embodiment sealing arrangement within the scope of the invention, in which yet a further modified form of step-introducing feature is employed;

Figures 25(a) and 25(b) are, respectively, a cross-sectional view and a sectional view on arrows A-A (of Fig. 25(a)) of one example of an axial translation mechanism, for use in various embodiments of the invention, which enables the frame to axially translate in response to axial movement of the sealing member;

Figures 26(a) and 26(b) are, respectively, a cross-sectional view and a sectional view on arrows A-A (of Fig. 26(a)) of another example of an axial translation mechanism, for use in various embodiments of the invention, which enables the frame to axially translate in response to axial movement of the sealing member;

Figures 27(a) and 27(b) are, respectively, a cross-sectional view and a sectional view on arrows A-A (of Fig. 27(a)) of yet another example of an axial translation mechanism, for use in various embodiments of the invention, which enables the frame to axially translate in response to axial movement of the sealing member;

Figures 28(a) and 28(b) are, respectively, a cross-sectional view and a sectional view on arrows A-A (of Fig. 28(a)) of yet another example of an axial translation mechanism, for use in various embodiments of the invention, which enables the frame to axially translate in response to axial movement of the sealing member;

Figure 29(a) corresponds to Figure 3(a) and is a simplified schematic cross-sectional view of a modified basic sealing arrangement which may constitute a precursor to various embodiments of the invention, in which the first and second pressure reduction zones on the first and second seal faces are formed in an alternative manner;

Figure 29(b) corresponds closely to Figure 3(b) and is a simplified schematic cross-sectional view of a modified basic sealing arrangement which may constitute a precursor to various embodiments of the invention, in which the first and second pressure reduction zones on the first and second seal faces are again formed in an alternative manner, but showing an alternative positioning of the axial pressure-balancing secondary seal;

Figure 30 is another simplified schematic cross-sectional view, again corresponding to Figure 3(a), of another modified basic sealing arrangement which may constitute a precursor to various embodiments of the invention, in which the intermediate pressure chamber within the frame is of an alternative shape;

Figure 31 is a simplified schematic cross-sectional view of another modified basic sealing arrangement which may constitute a precursor to certain embodiments of the invention, in which the orientation of the relatively moveable structures is modified;

Figure 32(a) is a simplified schematic cross-sectional view of yet another modified basic sealing arrangement which may constitute a precursor to certain embodiments of the invention, comprising a modified axial translation arrangement for enabling the frame to axially translate in response to axial movement of the sealing member, in which oppositely biased resilient members contribute to the overall self-centring mechanism;

Figure 32(b) shows the arrangement of Figure 32(a) with the sealing member under differential movement in the upstream direction relative to the frame;

Figure 32(c) shows the arrangement of Figure 32(a) with the sealing member under differential movement in the downstream direction relative to the frame;

Figure 33(a) is a simplified schematic cross-sectional view of yet another modified basic sealing arrangement which may constitute a precursor to certain embodiments of the invention, comprising another modified axial translation arrangement for enabling the frame to axially translate in response to axial movement of the sealing member;

Figure 33(b) is a top plan view of the arrangement of Figure 33(a);

Figure 34 is a simplified schematic cross-sectional view of yet another modified basic sealing arrangement which corresponds closely to that of Figure 32(a), but in which the oppositely biased resilient members are positioned at a different location;

Figure 35 is a simplified schematic cross-sectional view of yet another modified basic sealing arrangement which may constitute a precursor to various embodiments of the invention, in which the first and second seal portions of the frame are constituted by discrete seal elements.

Figure 36 is a simplified schematic cross-sectional view of yet another modified basic sealing arrangement which may constitute a precursor to various embodiments of the invention, in which the translating mechanism comprises springs located either side of the secondary seal, and the intermediate pressure chamber is substantially compartmentalised circumferentially;

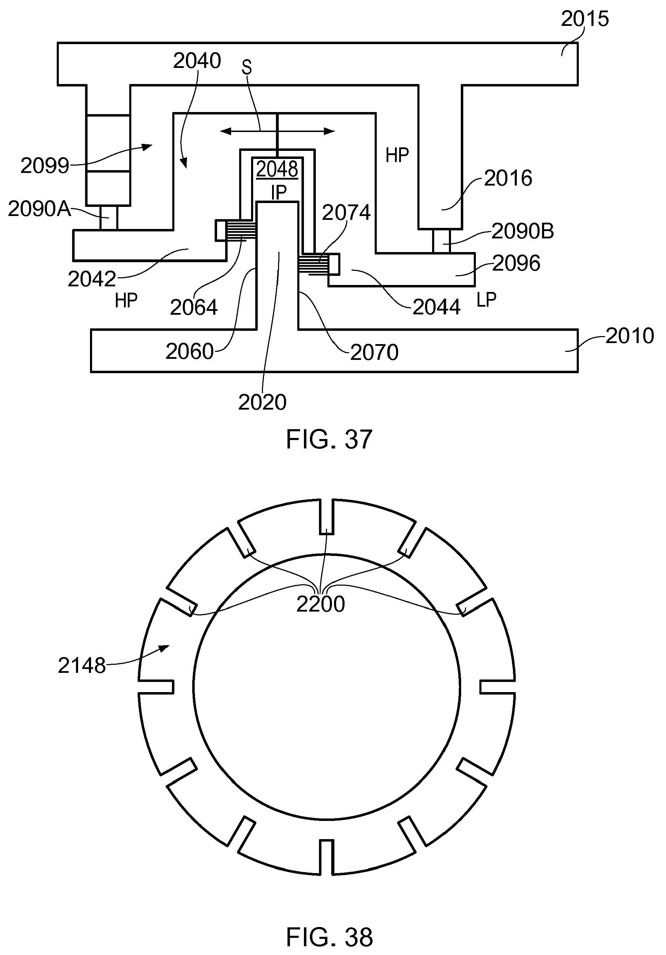

Figure 37 is a simplified schematic cross-sectional view of yet another modified basic sealing arrangement which may constitute a precursor to various embodiments of the invention, in which the first and second seal portions are offset compliant seals and the intermediate pressure chamber is substantially compartmentalised circumferentially and the volume of the chamber is reduced, and the secondary seals provide locating positions for the annular frame (wherein one of the secondary seals may be principally a locating device and not a seal, hence the optional presence of fluid by-pass holes); and

Figure 38 is a simplified schematic axial view of a substantially compartmentalised intermediate pressure chamber of an overall circumferential (e.g. segmented or fully annular) arrangement showing baffle plates or scallops that divide the intermediate pressure chamber to make it more difficult for circumferential flow to occur around the chamber compared with flow via the first and second seal portions of the sealing arrangement.

DETAILED DESCRIPTION OF EMBODIMENTS OF THE INVENTION

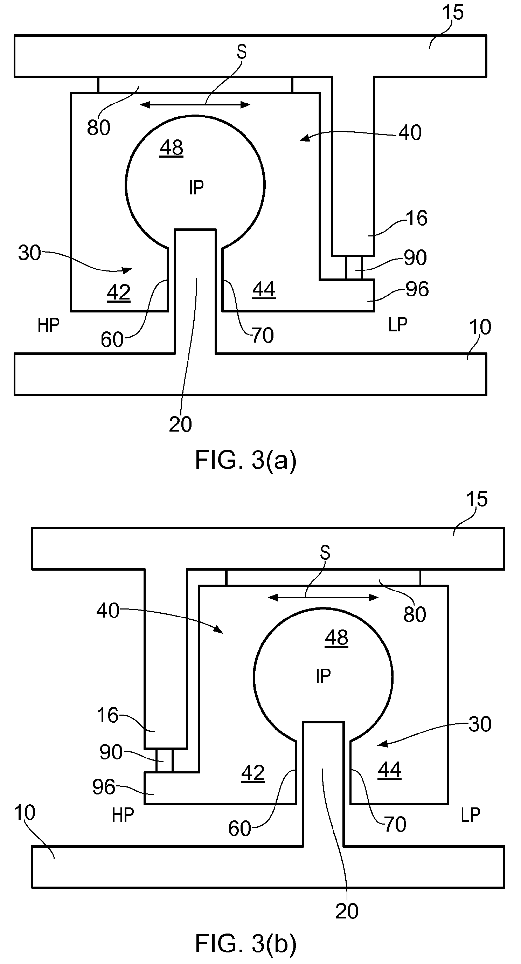

Referring firstly to Figs. 3(a) and 3(b), these Figures - which are to be understood as being simplified schematic drawings of a basic sealing arrangement which constitutes a precursor to various embodiments of the invention - serve to help explain the general concept of the sealing arrangements which are the subject of this disclosure.

As shown in Fig. 3(a), a rotating sealing member in the form of a fin or disc 20 carried on a rotor 10, e.g. a turbine shaft, creates a seal between it and a stationary structure 15 such as a portion of the engine casing. The seal comprises a double-face sealing arrangement 30 carried on a frame 40 such that there is an intermediate pressure (IP) in a region or chamber 48 within the frame 40 and between an upstream relatively high pressure region (HP) and a downstream relatively low pressure region (LP). The double-face sealing arrangement 30 comprises an upstream seal face 60 provided on an upstream seal portion 42 of the frame 40 and a downstream seal face 70 provided on a downstream seal portion 44 of the frame 40, the upstream and downstream seal faces 60, 70 being located to axially opposite sides of the rotating fin or disc 20 and connected rigidly together via the main body of the frame 40 which defines the intermediate pressure chamber or cavity 48 therewithin. In this schematic illustration of a precursor arrangement to sealing arrangements of embodiments, the characteristic pressure reduction zones formed on each side of the sealing arrangement 30 are not shown at this stage, for simplicity and clarity, but examples thereof will be discussed and described in detail further below with reference to various of the subsequent accompanying drawings. The frame 40 providing the seal portions 42, 44 of this sealing arrangement 30 is mounted on a slider mechanism 80 which allows it to move axially, i.e. generally substantially parallel to the axis of rotation of the rotor 10, as in the direction of arrow S, along and therefore to follow any axially longitudinal movement of the rotor during its use, e.g. as a result of thermal expansion or the application thereto of particular directed loads. A secondary seal 90, e.g. selected from conventional high-pressure air seals such as a brush seal, leaf seal, finger seal, labyrinth seal, piston ring, split ring seal, carbon seal, lip seal, etc (any of which seals may be metallic or non-metallic, e.g. ceramic or of a plastics or polymeric material), is mounted between a radial extension portion 16 of the stationary engine casing structure 15, which extends towards the rotor 10, and an axially directed extension portion 96 of the frame 40. The secondary seal 90 is located at approximately mid-radial height relative to the seal faces 60, 70, so that the system is pressure balanced axially, as explained further below. The secondary seal 90 may be placed either on the LP side of the arrangement, as shown in Fig. 3(a), or alternatively it may be placed on the HP side of the arrangement, as shown in the alternative, reversed (but otherwise the same) arrangement shown in Fig. 3(b).

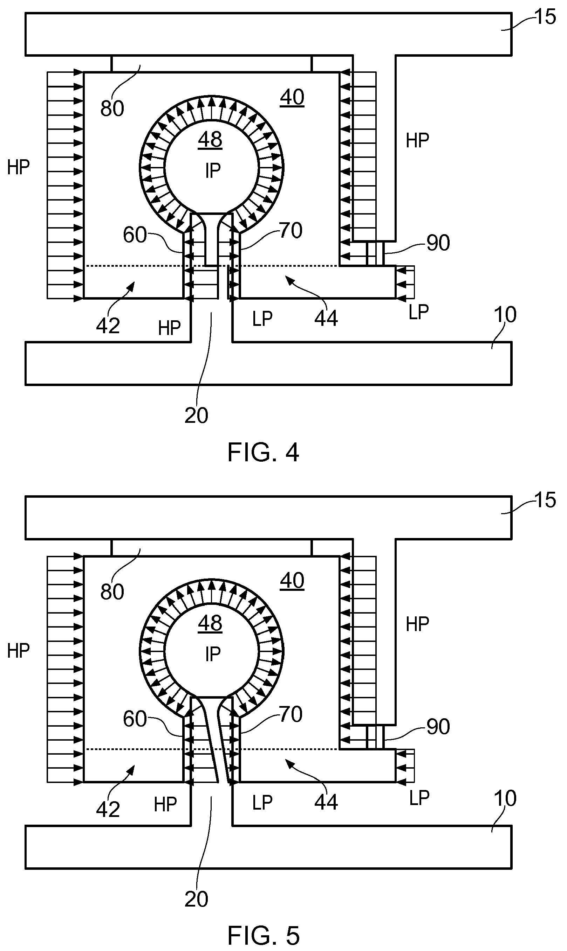

The position of the secondary seal 90 is such as to axially balance the sealing arrangement 30, and this is achieved as explained below, with reference to Figs. 4 and 5.

Consider first the pressure balancing function of the secondary seal 90. Fig. 4 shows the pressures acting on the various parts of the frame 40 with the notional assumption that the pressure is dropped - going in the directions, respectively, from HP to IP along seal face 60 and from IP to LP along seal face 70 - at the radial mid-points of the respective seal faces 60, 70. The sliding mechanism 80 itself does not drop pressure across the seal arrangement, so the axially rear (i.e. downstream) external side of the frame 40 is pressurised with high pressure (HP) fluid which balances much of the front (i.e. upstream) pressure loading thereon. The portion of the seal arrangement that needs to be considered in detail is the radial section where the seal faces 60, 70 are located on, respectively, the first (upstream) 42 and second (downstream) 44 seal portions of the frame 40. The radially inner portion of the first (upstream) seal face 60 is in fluid communication with the HP region, and the radially outer portion of the first (upstream) seal face 60 is in fluid communication with the IP region. Conversely, the radially outer portion of the second (downstream) seal face 70 is in fluid communication with the IP region, and the radially inner portion of the second (downstream) seal face 70 is in fluid communication with the LP region.

Considering the first (upstream) seal face 60 first of all: in the case where the fluid pressure on this seal face 60 is considered to be dropped between HP and IP at a radial mid-point position therealong, then the lower (as drawn) section of the first (upstream) seal portion 42 of the frame 40 has high pressure (HP) on both its upstream (exterior) and downstream (interior) sides, and therefore has no net axial load across it. Conversely, the lower (as drawn) section of the second (downstream) seal portion 44 has low pressure (LP) on both its upstream (interior) and downstream (exterior) sides, and therefore too has no net axial load across it. However, the upper (as drawn) section of the first (upstream) seal portion 42 has high pressure (HP) on the upstream (exterior) side thereof and intermediate pressure (IP) on the downstream (interior) side thereof, which creates a net axial load thereon of $(P_{HP} - P_{IP})*A$ (where A is area) acting towards the downstream direction. Conversely, the upper (as drawn) section of the second (downstream) seal portion 44 has intermediate pressure (IP) on the upstream (interior) side thereof and high pressure (HP) on the downstream (exterior) side thereof, which creates a net axial load thereon of $(P_{HP} - P_{IP})*A$ acting towards the upstream direction. Thus the overall net axial load across the seal portions 42, 44 is zero.

It will be appreciated that this axial pressure balance is independent of the magnitude of the intermediate pressure (IP) in the chamber region 48: the load balance is achieved not only when the clearance gap between the sealing fin or disc 20 and the upstream seal face 60 tends to be reduced (i.e. the sealing arrangement "pinches" more to the upstream side of the frame) - in which configuration the magnitude of the pressure in the intermediate pressure chamber 48 tends towards that of the low pressure (LP) region -, but the load balance is also achieved when the clearance gap between the sealing fin or disc 20 and the downstream seal face 70 tends to be reduced (i.e. the sealing arrangement "pinches" more to the downstream side of the frame) - in which configuration the magnitude of the pressure in the intermediate pressure chamber 48 tends towards that of the high pressure (HP) region.

Fig. 5 demonstrates that the pressure may not necessarily need to be dropped at one point in order to achieve the above-discussed load balancing. As shown notionally in Fig. 5, here there is considered to be a linear drop in pressure radially along both the seal faces 60, 70. Let the radial height of the secondary seal 90 from the radial base line (datum) of the seal faces 60, 70 be a and the radial height of the seal faces 60, 70 themselves, from the same datum, be **b.** The pressure loading across each seal face 60, 70 is the integral of the axial pressure difference with respect to the area. When the radial distance is relatively large, the pressure loading in the downstream direction along the first (upstream) seal face 60 per unit length is $(P_{HP}*b/2 - P_{IP}*b/2),$ and that across the second (downstream) seal face 70 seal is $(P_{LP}*b/2 + P_{IP}*b/2 - P_{HP}*b + P_{HP}*a - P_{LP}*a),$ so that the net load in the downstream direction is $(P_{HP}*(a - b/2) + P_{LP}*(b/2 - a))$. When the secondary seal 90 is placed at the radial mid-point position, then $a = b/2$ and so the net force becomes zero, i.e. the seal arrangement is axially pressure balanced once again.

With a smaller radial distance, the pressure balance may be achieved by the appropriate selection of the radial positioning of the secondary seal 90. With a different pressure drop profile across the seal faces 60, 70 the pressure balance can be adjusted by varying the radial position of the secondary seal 90 so as to achieve a zero net axial pressure load. In this way the effect of any overall net force, directed in either the downstream or the upstream direction, exerted on the frame 40 on or by the seal faces 60, 70 in accordance with embodiments, is such as to result in an axial sliding of the frame 40 on the sliding mechanism 80, rather than it simply acting against a main pressure load exerted on any one exterior side of the frame.

Although the above principle of pressure balancing by the secondary seal 90 has been discussed in relation to Figs. 4 and 5 in the context of the secondary seal 90 being positioned to the LP side of the arrangement, it is to be understood that by corresponding mathematics and reasoning the same principle applies if the secondary seal is positioned to the HP side of the arrangement as shown in Fig. 3(b).

Consider now the geometry of the two opposing seal faces 60, 70. Having already achieved effective axial pressure balancing by virtue of the radial positioning of the secondary seal 90, the requirement of these seal faces 60, 70 is now to function so as to transmit a load to the frame 40 when the rotor seal fin or disc 20 is shifted axially towards either the upstream 60 or the downstream 70 seal face, such as to push the frame 40 axially so that it slides along the sliding mechanism 80 in the same axial direction so as to avoid contact between the seal fin or disc 20 and that seal face. There are various effective methods of achieving this, and they all involve delaying the pressure drop in passing across the relevant seal faces by configuring them with appropriately relatively positioned pressure reduction zones. The pressure reduction zone of the first (upstream - i.e. that proximal to and in communication with the higher pressure region (HP)) seal face 60 is positioned relatively distal to the rotor 20 carrying the sealing fin or disc 20, as compared to the pressure reduction zone of the second (downstream - i.e. that proximal and in communication with the lower pressure region (LP)) seal face 70 which is positioned relatively proximal to the rotor 20 carrying the sealing fin or disc 20. It is to such various configurations of such relatively positioned pressure reduction zones that embodiments are primarily directed.

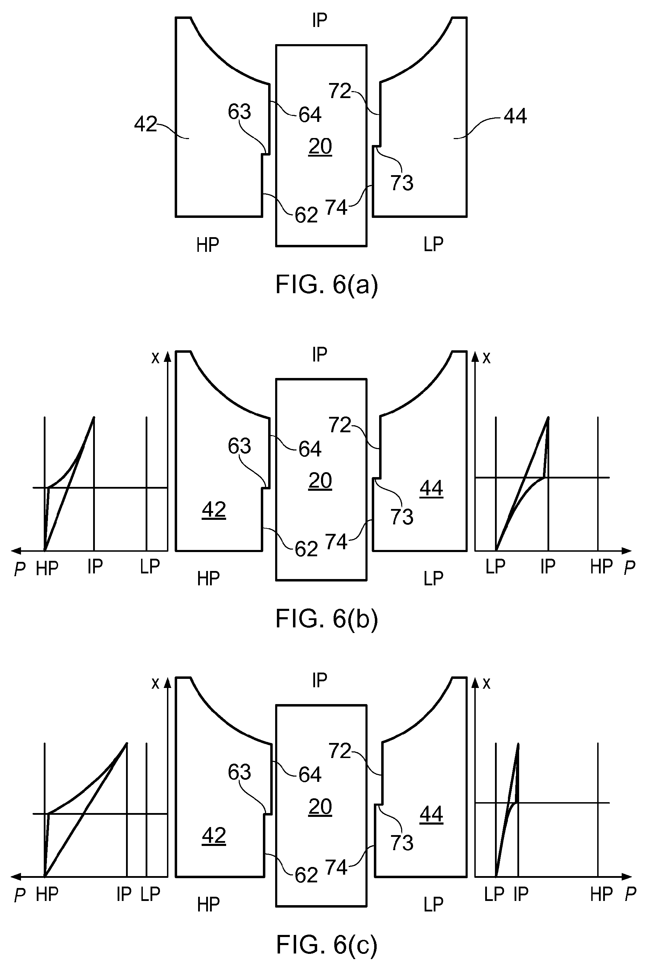

One such embodiment is that shown in and discussed now in relation to Figs. 6(a) to 6(f). Here the seal faces 60, 70 are each configured into a pressure reduction zone in the form of a simple radial step 63, 73 therein, as shown in Fig. 6(a). Each step 63, 73 is bounded on each radial end thereof by a respective pair of substantially planar seal face portions 62, 64; 72, 74.

The steps 63, 73 provide a method for ensuring that a restorative force on the frame 40 exists when the rotor fin or disc 20 is perturbed off its central equilibrium position. In the embodiment shown and discussed below in relation to Figs. 6(a) to (f), the radial steps 63, 73 are formed by modifying the geometry of the seal faces 60, 70 themselves.

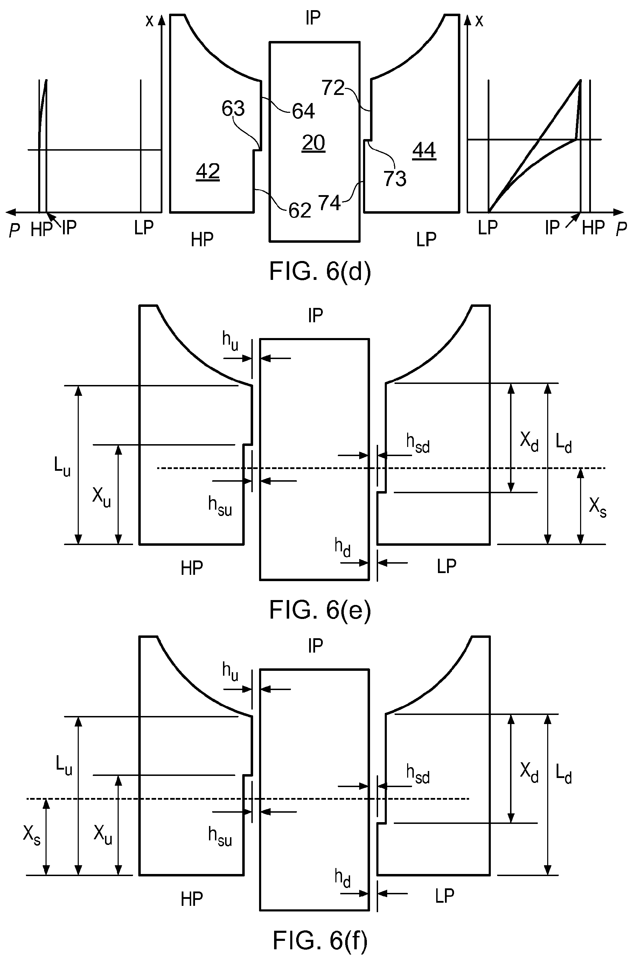

The basic operation of the sealing arrangement can be explained diagrammatically with reference to Figs. 6(b), 6(c) and 6(d). At the neutral (equilibrium) position shown in Fig. 6(b) (illustrated here by equal width respective maximum (and likewise respective minimum) clearance gaps to either side of the sealing fin or disc 20, although this may not necessarily be the case since its force-centred equilibrium position may be shifted from the true geometric-centred position by virtue of the radial position of each step and/or the radial position of the secondary seal 90, as discussed above and further below) the pressure is dropped mainly over the upstream radially distal seal face portion 64 and the downstream radially proximal seal face portion 74 which both have the smaller clearance gap against the sealing fin or disc 20. Conversely, as seen from the pressure profile graphs of the respective seal faces in Fig. 6(b), there is very little pressure drop over the upstream radially proximal seal face portion 62 and the downstream radially distal seal face portion 72 which both have the larger clearance gap against the sealing fin or disc 20. Each step 63, 73 thus enables the pressure along each entire seal face 60, 70 to remain above that which would be experienced from a linear pressure drop therealong, but the excess pressure above such a linear pressure drop is balanced on both the upstream and downstream seal faces 60, 70, thereby still creating an overall axial force balance (remembering that the linear pressure drop from the above discussion of Fig. 5 was shown to create no net axial force). This can be seen by a numerical approximation of the graphs in Figure 6(b) as follows:

- The relatively wide clearance gap against the radially proximal seal face portion 62 is pressurised by approximately **HP** fluid, whereas the relatively narrow clearance gap against the radially distal seal face portion 64 has an average pressure of approximately **(HP + IP)/2.** Conversely, the relatively wide clearance gap against the radially distal seal face portion 72 is pressurised by approximately **IP** fluid, whereas the relatively narrow clearance gap against the radially proximal seal face portion 74 has an average pressure of approximately **(IP + LP)/2.** The pressure on the axially exterior upstream side of the frame portion 42 is **HP** (since this is the pressure of the HP region on the upstream side of the frame itself), and the pressure on the axially exterior downstream side of the frame portion 44 is also **HP** (since this is the pressure of the extension of the HP region to the downstream side of the frame itself up to the secondary seal 90). However, the pressure on the axially exterior downstream side of the frame portion 44 is **LP** (since this is the pressure of the LP region on the downstream side of the frame itself radially proximal the rotor fin/disc 20 below the secondary seal 90).

- Therefore, the net force (assuming the areas the pressures are acting over are all equal to unity for the purpose of this explanation) acting on the upstream seal face portion 62 in the downstream direction is **HP - HP = 0,** the net force acting on the upstream seal face portion 64 in the downstream direction is **HP - (HP + IP)/2 = (HP - IP)/2,** the net force acting on the downstream seal face portion 72 in the downstream direction is **IP - HP,** and the net force acting on the downstream seal face portion 74 in the downstream direction is **(IP + LP)/2 - LP = (IP - LP)/2.** The overall net force acting on the sealing arrangement in the downstream direction is the sum of all four of these, which equates to **(HP - IP)/2 + (IP - HP) + (IP - LP)/2 = IP - (HP + LP)/2.** However, in the neutral equilibrium configuration as shown in Fig. 6(b), the intermediate pressure IP is approximately equal to the mean of the upstream (HP) and downstream (LP) pressures, i.e. **IP = (HP + LP)/2.** Thus, the overall net force on the sealing arrangement in the neutral equilibrium configuration is **zero.**

If or when the sealing fin/disc 20 moves upstream relative to the frame 40, as shown in Fig. 6(c), the clearance gap against the radially distal upstream seal face portion 64 becomes smaller still, and as a result most of the pressure drop occurs over this upstream seal face portion 64. The pressure in this distal upstream gap is significantly above that from a linear pressure drop therealong, as shown by the pressure profile graph in the left-hand part of Fig. 6(c). However there is a very little amount of pressure drop in the axially opposite clearance gap against the radially distal downstream seal face portion 72, to the opposite side of the sealing fin or disc 20, which becomes correspondingly wider, as shown by the pressure profile graph in the right-hand part of Fig. 6(c). As a result, there is an excess of pressure in the gap against radially distal upstream seal face portion 64 as compared with that against the axially opposite radially distal downstream seal face portion 72, and therefore this excess pressure creates a restorative force acting to open up the upstream gap (against the upstream seal face portion 64) and hence close up the downstream gap (against the downstream seal face portion 72).

As is also apparent from the pressure profile graphs in Fig. 6(c), the numerical approximation for the net force acting on the sealing arrangement in the downstream direction is also **IP - (HP + LP)/ 2.** However, from the graphs it is clear that **IP < (HP + LP)/2.** Thus the net force in the downstream direction is negative, signifying that the *overall* net force acting on the sealing arrangement is in the "upstream" direction, and this confirms that that force is indeed restorative, i.e. the sealing arrangement is indeed "self-centring".

When the situation is reversed, as shown in Fig. 6(d), and the sealing fin/disc 20 moves downstream relative to the frame 40 so that the clearance gap against the radially proximal downstream seal face portion 74 becomes smaller, i.e. closes up, then most of the pressure drop occurs over this closer downstream seal face portion 74. The pressure in this proximal downstream gap is significantly above that from a linear pressure drop therealong, as shown by the pressure profile graph in the right-hand part of Fig. 6(d). However there is a very little amount of pressure drop in the axially opposite clearance gap against the radially proximal upstream seal face portion 62, to the opposite side of the sealing fin or disc 20, which becomes correspondingly wider, as shown by the pressure profile graph in the left-hand part of Fig. 6(d). As a result, there is an excess of pressure in the gap against radially proximal downstream seal face portion 74 as compared with that against the axially opposite radially proximal upstream seal face portion 62, and therefore this excess pressure creates a restorative force acting to open up the downstream gap (against the downstream seal face portion 74) and hence close up the upstream gap (against the upstream seal face portion 62).

As is also apparent from the pressure profile graphs in Fig. 6(d), the numerical approximation for the net force acting on the sealing arrangement in the downstream direction is also **IP - (HP + LP)/2.** However, from the graphs it is clear that **IP > (HP + LP)/2.** Thus the net force in the downstream direction is positive, signifying that the *overall* net force acting on the sealing arrangement is in the "downstream" direction, and this confirms that the force is indeed restorative, i.e. the sealing arrangement is indeed "self-centring".

The preceding discussion demonstrates the working of this embodiment of the new and inventive self-centring sealing concept.

As an alternative, the basic operation of the sealing arrangement may be explained by resolving axial pressure forces, with reference to Fig. 6(e). This example arrangement is based on the secondary seal being located to the LP side of the arrangement.

Consider the left-hand side of Fig. 6(e). The force acting towards the downstream direction (from left to right in the drawing) is evaluated by summing the pressure forces on the left side of the frame:

$$p_u \cdot L_u - p_u \cdot x_u - \left( \frac{p_u + p_{INT}}{2} \right) \cdot \left( L_u - x_u \right)$$

$$= \left( \frac{p_u - p_{INT}}{2} \right) \cdot \left( L_u - x_u \right)$$

The right-hand side of Fig. 6(e) can be evaluated similarly. The difference here is that the secondary seal is located axially opposite the downstream seal face and its radial position is indicated by the distance $x_s$. Thus, the force

on the right side of the frame is:

$$p_{INT} \cdot x_d + \left( \frac{p_{INT} + p_d}{2} \right) \cdot \left( L_d - x_d \right) - p_u \cdot \left( L_d - x_s \right) - p_d \cdot x_s$$

Since the left and the right sides of the frame are fixed relative to each other, the overall axial force on the axially translatable sealing arrangement is simply the sum of the above forces on the left and right sides, namely:

$$\left( \frac{p_u - p_{INT}}{2} \right) \cdot \left( L_u - x_u \right) + p_{INT} \cdot x_d + \left( \frac{p_{INT} + p_d}{2} \right) \cdot \left( L_d - x_d \right) - p_u \cdot \left( L_d - x_s \right) - p_d \cdot x_s$$

Grouping pressure terms gives:

$$p_u \cdot \left[ \frac{L_u - x_u}{2} + x_s - L_d \right] + p_{INT} \cdot \left[ x_d + \frac{L_d - x_d}{2} - \frac{L_u - x_u}{2} \right] + p_d \cdot \left[ \frac{L_d - x_d}{2} - x_s \right]$$

When this is positive, there is a force pushing the sealing arrangement in the downstream direction.
Consider the case of an equal radial offset in the relative radial positions of the respective steps in the upstream and downstream seal faces on both axial sides of the arrangement, i.e. the case where $L_u = L_d$ and $x_u = x_d$:

$$p_u \cdot \left[ x_s - \frac{L_u + x_u}{2} \right] + p_{INT} \cdot x_u + p_d \cdot \left[ \frac{L_u - x_u}{2} - x_s \right]$$

Previous force-balancing arguments suggest that the secondary seal should preferably be placed at a radial location corresponding to a position close to, or substantially at, the mutual radial mid-points of the seal faces. Therefore we can write $x_s = L_u/2$, and this allows the net force to be:

$$p_u \cdot \left[ -\frac{x_u}{2} \right] + p_{INT} \cdot x_u + p_d \cdot \left[ -\frac{x_u}{2} \right]$$

$$= \left( p_u + p_d \right) \cdot \left[ -\frac{x_u}{2} \right] + p_{INT} \cdot x_u$$

Now, to obtain force equilibrium we require *either* $x_u = 0$ (which is the plain case already evaluated such as to allow correct placement of the secondary seal) or the intermediate pressure to be the mean pressure between the upstream (high) pressure and downstream (low) pressure, namely:

$$p_{INT} = \frac{p_u + p_d}{2}$$

For a radially offset stepped seal faces arrangement such as that shown in Fig. 6(e), in order for that arrangement to be restorative there needs to be a net axial load or force which acts to move the frame of the sealing arrangement back into the axial centred configuration after the sealing fin or disc has moved, relative to the frame, to either side thereof.
Consider the case where the rotor carrying the sealing fin or disc moves forwards towards the upstream direction. The upstream gap $h_u$ narrows while the downstream gap $h_d$ opens up. The intermediate pressure in the internal chamber within the frame starts to drop since the major flow restriction is now solely upstream of the intermediate chamber. Therefore the following inequality is true:

$$p_{INT} < \frac{p_u + p_d}{2}$$

and so the net force on the frame is negative, i.e. acting to push the frame of the arrangement in the upstream direction. Hence it is a restorative force.

Consider now the case where the rotor carrying the sealing fin or disc moves rearwards towards the downstream direction. Now the downstream gap $h_d$ narrows while the upstream gap $h_u$ opens up. The intermediate pressure in the internal chamber rises so as to assume a pressure tending towards or closer to the external upstream pressure conditions (HP). Therefore the inequality becomes:

$$p_{INT} > \frac{p_u + p_d}{2}$$

and so the net force on the frame is positive, i.e. acting to push the frame of the arrangement in the downstream direction. Hence it is again a restorative force.

Since both perturbed directions of axial movement of the sealing fin or disc relative to the frame give rise to a restorative force, this sealing arrangement has thus been demonstrated to be self-centring.

In an alternative version of the above arrangement, as shown in Fig. 6(f), if the secondary seal is instead placed on the HP side thereof, then the restorative force is created and works in exactly the same way, but with the various forces acting on the various parts of the arrangement axially transposed, viz:

Consider the left-hand side of Fig. 6(f). The force acting towards the downstream direction (from left to right in the drawing) is evaluated by summing the pressure forces on the left side of the frame (here the left side includes the secondary seal):

$$p_d \cdot (L_u - x_s) + p_u \cdot x_s - p_u \cdot x_u - \left(\frac{p_u + p_{INT}}{2}\right) \cdot (L_u - x_u)$$

The right-hand side of Fig. 6(f) can be evaluated similarly (this time it has no secondary seal):

$$p_{INT} \cdot x_d + \left(\frac{p_{INT} + p_d}{2}\right) \cdot (L_d - x_d) - p_d \cdot L_d$$

Since the left and the right sides of the frame are fixed relative to each other, the overall axial force on the axially translatable sealing arrangement is simply the sum of the above forces on the left and right sides, namely:

$$p_d \cdot (L_u - x_s) + p_u \cdot x_s - p_u \cdot x_u - \left(\frac{p_u + p_{INT}}{2}\right) \cdot (L_u - x_u) + p_{INT} \cdot x_d + \left(\frac{p_{INT} + p_d}{2}\right) \cdot (L_d - x_d) - p_d \cdot L_d$$

Grouping pressure terms gives:

$$p_u \cdot \left[x_s - x_u - \frac{L_u - x_u}{2}\right] + p_{INT} \cdot \left[x_d - \frac{L_u - x_u}{2} + \frac{L_d - x_d}{2}\right] + p_d \cdot \left[L_u - x_s + \frac{L_d - x_d}{2} - L_d\right]$$

When this is positive, there is a force pushing the sealing arrangement in the downstream direction.

Consider the case of an equal radial offset in the relative radial positions of the respective steps in the upstream and downstream seal faces on both axial sides of the arrangement, i.e. the case where $L_u = L_d$ and $x_u = x_d$:

$$p_u \cdot \left[ x_s - \frac{L_u + x_u}{2} \right] + p_{INT} \cdot x_u + p_d \cdot \left[ \frac{L_u - x_u}{2} - x_s \right]$$

Previous force-balancing arguments suggest that the secondary seal should preferably be placed at a radial location corresponding to a position close to, or substantially at, the mutual radial mid-points of the seal faces. Therefore we can write $x_s = L_u/2$, and this allows the net force to be:

$$p_u \cdot \left[ -\frac{x_u}{2} \right] + p_{INT} \cdot x_u + p_d \cdot \left[ -\frac{x_u}{2} \right]$$

$$= \left( p_u + p_d \right) \cdot \left[ -\frac{x_u}{2} \right] + p_{INT} \cdot x_u$$

This net force is the same as that for the case where the secondary seal was placed on the LP side of the arrangement. Again, to obtain force equilibrium we require *either* $x_u = 0$ (which is the plain case already evaluated such as to allow correct placement of the secondary seal) or the intermediate pressure to be the mean pressure between the upstream (high) pressure and downstream (low) pressure, namely:

$$p_{INT} = \frac{p_u + p_d}{2}$$

For a radially offset stepped seal faces arrangement such as that shown in Fig. 6(f), in order for that arrangement to be restorative there needs to be a net axial load or force which acts to move the frame of the sealing arrangement back into the axial centred configuration after the sealing fin or disc has moved, relative to the frame, to either side thereof.

Consider the case where the rotor carrying the sealing fin or disc moves forwards towards the upstream direction. The upstream gap $h_u$ narrows while the downstream gap $h_d$ opens up. The intermediate pressure in the internal chamber within the frame starts to drop since the major flow restriction is now solely upstream of the intermediate chamber. Therefore the following inequality is true:

$$p_{INT} < \frac{p_u + p_d}{2}$$

and so the net force on the frame is negative, i.e. acting to push the frame of the arrangement in the upstream direction. Hence it is a restorative force.

Consider now the case where the rotor carrying the sealing fin or disc moves rearwards towards the downstream direction. Now the downstream gap $h_d$ narrows while the upstream gap $h_u$ opens up. The intermediate pressure in the internal chamber rises so as to assume a pressure tending towards or closer to the external upstream pressure conditions (HP). Therefore the inequality becomes:

$$p_{INT} > \frac{p_u + p_d}{2}$$

and so the net force on the frame is positive, i.e. acting to push the frame of the arrangement in the downstream direction. Hence it is again a restorative force.

Since both perturbed directions of axial movement of the sealing fin or disc relative to the frame give rise to a restorative force, this sealing arrangement has thus been demonstrated to be self-centring. Furthermore, the secondary seal can be placed on either the upstream or downstream exterior side of the frame without changing the axial force balance and the restorative force behaviour.

In summary, a key idea is that the radial position of the pressure drop (or reduction) feature on the seal face located towards the higher pressure region, i.e. the upstream seal face in the cases described above, must be radially further out from, i.e. radially distal relative to, the axis of movement of the sealing fin or disc than the corresponding radial position of the pressure drop (or reduction) feature on the seal face located towards the lower pressure region, i.e. the downstream seal face in the cases described above. Furthermore, in many preferred embodiments in which a secondary seal is used to effect the axial pressure balance between the axially exterior sides of the frame, the secondary seal may preferably be placed at a radial location intermediate those two radial positions of the respective pressure drop features, especially at the neutral, i.e. equilibrium-defining, radial position, e.g. midway, therebetween.

In various practical embodiments which utilise a step feature to achieve the required pressure drop (or reduction) feature on each respective seal face, the configuration and/or geometry of the step feature may take any of several different forms. One such form is the basic step arrangement, comprising a pair of generally planar subzones or subfaces 62, 64; 72, 74 joined by a transverse step or ramp 63, 73, as shown in the embodiments of Figs. 6(a) - (f) and discussed above. Here the geometry of each step 63, 73 is formed actually on the seal faces 60, 70 of the seal portions 42, 44 of the frame 40 itself, with the axial side faces of the sealing fin or disc 20 being substantially flat and parallel to each other and to the respective seal face subfaces 62, 64; 72, 74.

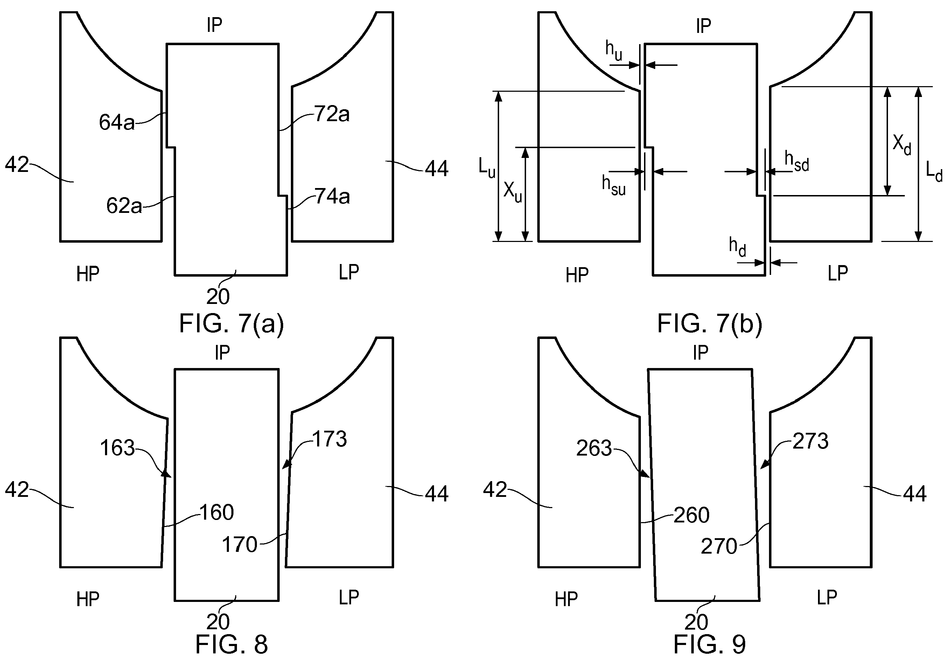

However, in some alternative embodiments, as shown and discussed below in relation to Figs. 7(a) and 7(b), the geometry of each radial step 63a, 73a is formed instead by modifying the geometry of the axial side faces of the sealing fin or disc 20, with the seal faces of the seal portions 42, 44 of the frame 40 remaining uni-planar.

The generic geometry of this embodiment arrangement is shown in Fig. 7(a). The key dimensions for the step and the operation of the sealing arrangement are defined by $L_u$, $x_u$, $h_{su}$, $h_u$, $L_d$, $x_d$, $h_{sd}$, $h_d$. The total sealing gap between the sealing fin or disc 20 and the seal portions 42, 44 of the frame - being the sum of the respective sealing clearance gaps between each respective seal face of the frame seal portions 42, 44 and each planar subface 64a, 74a of the sealing fin or disc 20 on either axial side thereof - is defined by the sum $(h_u + h_d)$ and this must preferably be large enough to accommodate the dynamics of axial movement of the sealing fin or disc 20 relative to the frame but small enough to create as low-leakage a sealing arrangement as possible.

By way of example, each such clearance gap $h_u$, $h_d$ on either axial side of the arrangement may typically have a width in a range of e.g. from about 0.05 mm to about 0.5mm for many typical practical embodiments, which may typically give good performance in the field of gas turbine engine rotors, but it is to be understood that smaller or larger clearance gap widths outside this range may be possible, e.g. depending on the size and scale of the arrangement or particular individual operating characteristics thereof. The respective radial position of each step 63a, 73a may be defined by the ratio $x_u/L_u$ or $x_d/L_d$, which ratios may typically have a value in a range of e.g. from about 0.25 to about 0.95 in many typical practical embodiments, although again it is to be understood that smaller or larger such ratios outside this range may be possible, e.g. depending on the size and scale of the arrangement or particular individual operating characteristics thereof. The respective step height of each step 63a, 73a may be defined by the ratio $(h_{su}/(h_u + h_d))$ or $(h_{sd}/(h_u + h_d))$, which ratios may typically have a value in a range of e.g. from about 0.25 to about 1 in many typical practical embodiments, although yet again it is to be understood that smaller or larger such ratios outside this range may be possible, e.g. depending on the size and scale of the arrangement or particular individual operating characteristics thereof.

Thus, by careful selection of the step geometry and also preferably by appropriate radial positioning of the secondary seal, it is possible to achieve not only axial pressure balance across the frame but also the establishment of the required self-centring restorative force(s) on the frame necessary for non-contact sealing operation in the event of axial movement of the sealing fin or disc relative to the frame.

In accordance with some other embodiments, various other alternative shapes and configurations of the respective pressure reduction zone features against each seal portion of the frame, to either side of the sealing fin or disc 20, which may also create the required self-centring restorative force(s) on the frame, are illustrated in Figs. 8 to 15. Each of these Figures thus represents in principle yet another possible embodiment form of sealing arrangement. In each of these Figures individual features of the embodiment which are distinct from but correspond in form and/or function to those in earlier embodiments shown in e.g. Figs. 6 and 7 are identified by the same reference numerals but incremented by 100 each time in moving from one Figure to the next.

In the embodiment of Fig. 8 each pressure reduction zone is formed by a wedge-shaped clearance gap 163, 173, or a clearance gap with uniformly converging walls, on each axial side of the arrangement. In other words, each pressure reduction zone is formed between the respective planar side of the sealing fin or disc 20 (the two sides of which are parallel to each other) and the respective adjacent seal face 160, 170 of the frame by virtue of the respective planar parallel side of the sealing fin or disc 20 being substantially normal to the axial direction of the arrangement and the respective adjacent seal face 160, 170 being oriented non-perpendicular to that axial direction, i.e. at an inclined angle, e.g. of a few degrees, such as in a range of from about 2 or 3 or 5 up to about 8 or 10 or 15 or even 20 degrees, relative to the plane of the respective side of the sealing fin or disc 20.

Thus, the required pressure drop along each pressure reduction zone can be achieved as the respective clearance gap 163, 173 closes up passing radially along it from its wider (relatively higher pressure) end to its narrower (relatively lower pressure) end. The operation of this arrangement and the manner in which the respective restorative forces are generated upon axial movement of the sealing fin or disc 20 relative to the frame 42, 44 correspond closely to that of the stepped arrangements as shown in Figs. 6 and 7 and explained above.

The embodiment of Fig. 9 is closely similar to that of Fig. 8, but here the wedge-shaped clearance gap 263, 273, or clearance gap with uniformly converging walls, on each axial side of the arrangement is formed by appropriate non-perpendicular orientation *not* of the seal faces 260, 270 themselves (which in this embodiment remain substantially parallel to each other and substantially normal to the axial direction of the arrangement), but instead by a correspondingly inclined, angled such as at like angle(s) as in the embodiment of Fig. 8, non-perpendicular orientation of each of the planar sides of the sealing fin or disc 20 (the two sides of which are still parallel to each other). Thus, in this embodiment the non-radially inclined, but parallel, sides of the sealing fin or disc 20 itself lead to it assuming a cross-sectional shape of the form of, or akin to, a parallelogram. The operation of this arrangement and the manner in which the respective restorative forces are generated upon axial movement of the sealing fin or disc 20 relative to the frame 42, 44 closely correspond to the geometrically analogous arrangement of Fig. 8.

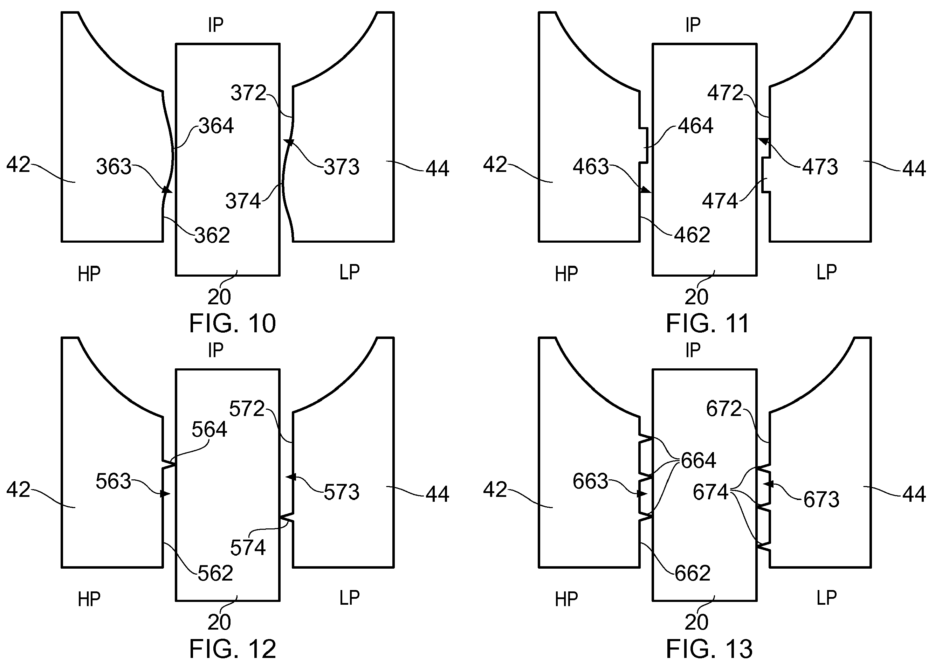

In the embodiment of Fig. 10 each pressure reduction zone is formed by a nozzle-shaped clearance gap 363, 373, or a clearance gap with non-uniformly converging walls, on each axial side of the arrangement. In other words, each pressure reduction zone is formed between the respective planar side of the sealing fin or disc 20 (the two sides of which are parallel to each other) and the respective adjacent seal face 360, 370 of the frame by virtue of the respective planar parallel side of the sealing fin or disc 20 being substantially normal to the axial direction of the arrangement and the respective adjacent seal face 360, 370 being configured into first 362, 372 and second 364, 374 seal face subfaces, wherein at least a portion of the first subface and/or at least a portion of the second subface has (have) wall(s) whose angle of inclination to the radial direction (i.e. normal to the axial direction of the arrangement) varies passing radially therealong, preferably increasing in passing from the relatively higher pressure end of the gap to the relatively lower pressure end thereof. Thus, the walls defining the first and second subfaces 362, 372; 372, 374 of each seal face may merge into one another such as to form a respective clearance gap 363, 373 which narrows at an increasing rate passing along it, especially from its relatively higher pressure end to its relatively lower pressure end. Each respective second subface 364, 374 of the respective seal face 360, 370 may optionally be configured as a shoulder or arcuate nose portion, as shown in Fig. 10, the peak of which defines a minimum width of the respective clearance gap 363, 373.

Thus, the required pressure drop along each pressure reduction zone can be achieved as the respective clearance gap 363, 373 closes up or is constricted at an increasing rate passing radially along it from its wider (relatively higher pressure) end (in first subface 362, 372) to its narrower (relatively lower pressure) end (in second subface 364, 374). The operation of this arrangement and the manner in which the respective restorative forces are generated upon axial movement of the sealing fin or disc 20 relative to the frame 42, 44 correspond closely to that of the stepped arrangements as shown in Figs. 6 and 7 and the wedge-shaped arrangements as shown in Figs. 8 and 9 and explained above.

In the embodiment of Fig. 11 each pressure reduction zone is formed again by a stepped arrangement, similar in form and operation to the embodiments of Figs. 6 and 7, but here the step in each seal face 460, 470 is formed by a discrete lip or nose portion 464, 474 which protrudes in a generally axial direction from the respective seal face 460, 470 into the respective clearance gap 463, 473. The axial side face of each respective lip or nose portion 464, 474 which projects and faces inwardly into the respective clearance gap 463, 473 thus constitutes a second subface of the respective seal face 460, 470, it being delimited from the planar first subface 462, 472 thereof by the respective radial end face of the lip or nose portion 464, 474 which in effect forms the step feature that leads to an effective constriction in the respective clearance gap 463, 473 passing radially along it from its wider (relatively higher pressure) end (against first subface 462, 472) to its narrower (relatively lower pressure) end (against the lip or nose/second subface 464, 474).

Thus, the required pressure drop along each pressure reduction zone can be achieved as the respective clearance gap 463, 473 transitions from its relatively broad width in its respective first (relatively higher pressure) subface 462, 472 to its relatively narrow width in its respective second (relatively low pressure) subface defined by its respective lip or nose portion 464, 474. The operation of this arrangement and the manner in which the respective restorative forces are generated upon axial movement of the sealing fin or disc 20 relative to the frame 42, 44 correspond closely to that of the simpler stepped arrangements as shown in Figs. 6 and 7 and explained above.

In the embodiment of Fig. 12 the concept of a lip or nose portion to define a constriction in the respective clearance gaps 560, 570 to create the respective pressure reduction zones is taken a developmental step further, by forming each respective constriction portion as or into a respective knife or tooth or fin portion 564, 574. Each knife, tooth or fin portion 564, 574 may be thought of, and may effectively function in the manner of, a single-fin labyrinth type of seal. Each respective knife, tooth or fin portion 564, 574 may be substantially sharp-edged, as shown in Fig. 12, or alternatively it may, if desired or necessary, be somewhat arcuate or rounded, or possibly even polygonally shaped in cross-section. Furthermore, each knife, tooth or fin portion 564, 574 may be oriented symmetrically such that it points in a direction substantially parallel to the axial direction of the arrangement, or alternatively it may be oriented asymmetrically such that it is angled, e.g. at a small angle (such as in the range of from about 1 or 2 or 3 or 5 up to about 8 or 10 or 15 degrees), relative to that axial direction. Once again, the exact relative radial positioning of the respective knife, tooth or fin portions 564, 574 may be carefully managed so that they are sufficiently radially offset relative to each other (with that on the HP side being sufficiently more distal from the HP region than that on the LP side is distal from the LP region) in order to generate the required degree of restorative force acting on the frame 42, 44 when the sealing fin or disc 20 moves off-centre axially relative thereto.

In the embodiment of Fig. 13 the concept of a single knife, tooth or fin portion (i.e. a single-fin labyrinth) to define a constriction in the respective clearance gaps 660, 670 to create the respective pressure reduction zones is taken a developmental step even further, by forming each respective constriction portion as or into a respective plural-knife, -tooth or -fin portion 664, 674, that is to say, into a respective labyrinth type of seal. The shape, configuration and positioning of, as well as the number of, knife, tooth or fin portions 664, 674 forming each respective labyrinth seal may be such that the respective labyrinth is of a straight-through labyrinth type or alternatively a stepped labyrinth type. In any such form, the knife, tooth or fin portions 664, 674 may be substantially sharp-edged, as shown in Fig. 13, or alternatively they may, if desired or necessary, be somewhat arcuate or rounded, or possibly even polygonally shaped in cross-section. Furthermore, the knife, tooth or fin portions 664, 674 may be oriented symmetrically such that they point in a direction substantially parallel to the axial direction of the arrangement, or alternatively they may be oriented asymmetrically such that they are angled, e.g. at a small angle (such as in the range of from about 1 or 2 or 3 or 5 up to about 8 or 10 or 15 degrees), relative to that axial direction. Once again, the exact relative radial positioning of the respective groups of a plurality of (e.g. 2, 3, or possibly even more than 3) knife, tooth or fin portions 664, 674 forming each respective labyrinth seal may be carefully managed so that they are sufficiently radially offset relative to each other (with that group on the HP side being sufficiently more distal from the HP region than that group on the LP side is distal from the LP region) in order to generate the required degree of restorative force acting on the frame 42, 44 when the sealing fin or disc 20 moves off-centre axially relative thereto.

Although in the embodiments as illustrated Figs. 12 and 13 the peaks or tips of the single-fin and plural-fin labyrinth type seal constructions forming the respective pressure reduction zones are shown as having very small or very narrow clearance gaps against the respective axial side faces of the sealing fin or disc 20, it is to be understood that those clearance gaps may in practice be designed to have any desired or appropriate width, even somewhat greater widths from those shown in these Figures, in order to allow for or accommodate any desired or appropriate degree of axial movement of the sealing fin or disc 20 relative to the frame 42, 44 whist preserving the sealing arrangement's self-centring functionality.

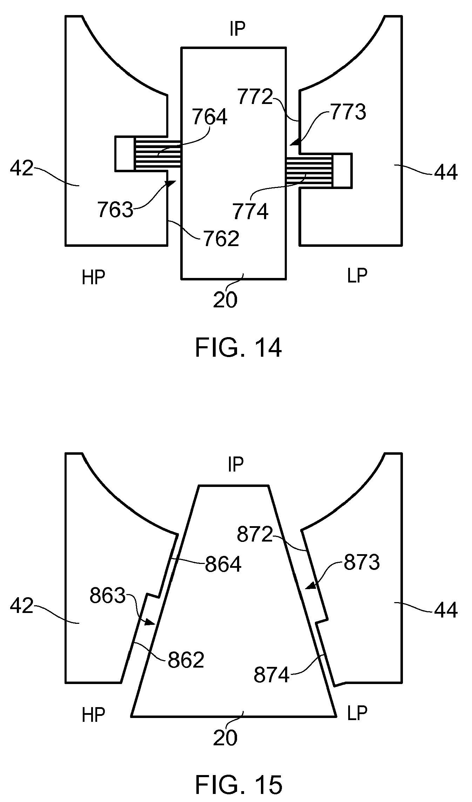

In the embodiment of Fig. 14 the concept of the above single-fin or plural-fin labyrinth type seals to define a constriction in the respective clearance gaps 660, 670 to create the respective pressure reduction zones is taken yet another developmental step further, by forming each respective constriction by the provision in a portion of each respective clearance gap 660, 670 of a respective brush seal 764, 774. Such brush seals may be of any known type, or alternatively may be constituted by any other compliant, flexible or resilient contact-type sealing device where there may be contact between individual filaments of the seal and the surface against which it is to perform the desired sealing function. As in the preceding several embodiments, the exact relative radial positioning of the respective brush seals 764, 774 may be carefully managed so that they are sufficiently radially offset relative to each other (with that on the HP side being sufficiently more distal from the HP region than that on the LP side is distal from the LP region) in order to generate the required degree of restorative force acting on the frame 42, 44 when the sealing fin or disc 20 moves off-centre axially relative thereto.

In addition to its primary self-centring functionality as discussed above, a brush seal or other compliant, flexible or resilient contact-type sealing device may inherently also have a secondary functionality, which is to provide an additional component of any restorative force on the frame by virtue of the inherent resilience of the filament(s) thereof.

Furthermore, such a brush seal or other compliant, flexible or resilient contact-type sealing device may inherently also have a tertiary functionality, which is to provide a (or a component of an overall) damping mechanism to assist in accommodating especially large axial movements of the sealing fin or disc 20 relative to the frame 42, 44, and especially to help prevent, ameliorate or resist oscillations in such axial movement occurring.

These additional functionalities may assist in allowing the respective clearance gaps 763, 773 to be reduced in width and their leakage performance to be somewhat, or at least slightly, improved.

In many of the above-described embodiments, in particular those illustrated in Figs. 6, 7, 11, 12, 13 and 14, it is generally the case that the two main or primary seal faces of the seal portions 42, 44 of the frame 40, and likewise also the axially opposite sides of the sealing fin or disc 20, are nominally or substantially parallel to each other. However, this does not necessarily always need to be the case. Indeed, in some embodiment forms of the sealing arrangement it may be that the main or primary seal faces of the seal portions 42, 44 of the frame 40 are not parallel to each other, and/or it may be that the axially opposite sides of the sealing fin or disc 20 are not parallel to each other either. Nevertheless, in some such embodiments it may be the case that a first main or primary seal face of the first seal portion 42 and a first axial side face of the sealing fin or disc 20 are generally substantially parallel to each other, and preferably likewise also a second main or primary seal face of the second seal portion 44 and a second axial side face of the sealing fin or disc 20 are also generally substantially parallel to each other.

The embodiment shown in Fig. 15 is one example of such an arrangement, which in this case may be seen as, and thus conveniently termed, a "wedged" or "coned" arrangement. That is to say, the axially opposite side faces of the wedge-shaped (or cone-shaped) sealing fin or disc 20 are non-parallel to each other, e.g. angled with respect to each other such as by an angle in the approximate range of from about 5 or 10 or 20 or 30° to about 50 or 60 or 70 or 80°. Likewise the main or primary seal faces 860, 870 of the seal portions 42, 44 of the frame 40 are also non-parallel to each other and angled with respect to each other by the same angle as that of the axial side faces of the sealing fin or disc 20. The angled configurations of the axial side faces of the sealing fin or disc 20 and the seal faces 860, 870 may or (perhaps less preferably) may not be symmetrical about a radial direction perpendicular to the defined axial direction of the arrangement.

As shown in Fig. 15, each of the clearance gaps 863, 873 between the respective pairs of seal faces 860, 870 and their adjacent axial side faces of the sealing fin or disc 20 is configured into the requisite respective pressure reduction zones. In the specific case as illustrated, each pressure reduction zone comprises a stepped arrangement much the same in form and function as that in the embodiment shown in Fig. 6 and described in detail above. However, it is to be understood that in the context of any such "wedged" or "coned" arrangement such as that shown here, any alternative geometry or configuration of pressure reduction zone-forming structural features may be employed, such as any of those described above and illustrated in principle in the embodiments of any of Figs. 7 to 14.

Referring now to various other embodiments of sealing arrangement, in addition to the basic configuring of the seal faces of the frame and/or the side faces of the sealing fin or disc to form the requisite respective pressure reduction zones, it may be possible to further modify the configuration of the seal faces and/or side faces of the sealing fin or disc in order to further enhance the functionality of the arrangement in providing the desired pressure reduction that leads to the restorative self-centring forces during use. In particular this may be related to the nature, especially the "stiffness", of the fluid film passing over the surface(s) of the arrangement.

When the sealing fin or disc 20 of an arrangement in accordance with many practical embodiments is rotated relative to and adjacent (or even against) the seal faces of the seal portions 42, 44 of the frame 40 such as in normal operation in a typical turbomachine, there is an added potential for the air (or other fluid) film between the relatively moving parts to be stiffened by the inclusion of one or more air-riding (or other fluid-riding) features either in or on the seal faces themselves or in or on the rotating sealing fin or disc (or possibly on both of these components). This stiffening comes about because work is taken out of the rotating shaft or other structure carrying the sealing fin or disc and pressure is increased in the small air film between the relatively moving parts such that it has an elevated load carrying capacity. Such air-riding feature(s) may be incorporated into the arrangement preferably in addition to the basic configurational features which define or give rise to the basic pressure reduction zones themselves. Furthermore, such air-riding feature(s) may form or constitute a component part of such basic pressure reduction zone configurational features themselves, or it/they may be applied to the relevant components of the arrangement as a discrete configurational feature.

In some such alternative embodiments, such one or more air-riding features may be particularly usefully applied to arrangements which include some form of stepped configurational arrangement to define or constitute the respective pressure reduction zones, such as the simple radially stepped arrangements described above and shown in Figs. 6 and 7. However, such one or more air-riding features may also be applied to other, non-stepped arrangements, such as any of the convergent or constriction-including arrangements described above and shown in any of Figs. 8 to 14, or even the wedged or coned arrangement as described above and shown in Fig. 15.

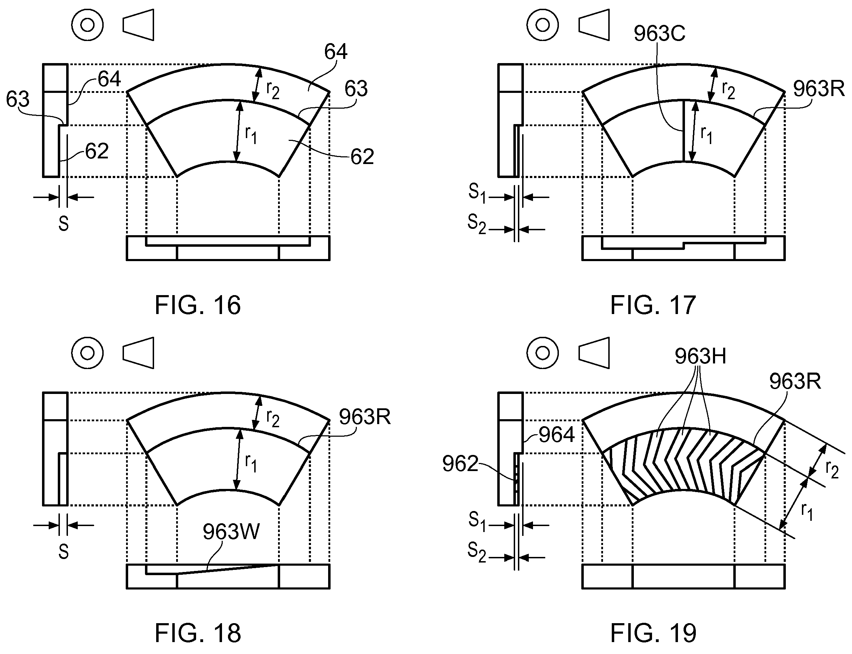

Figs. 16 to 24 of the drawings illustrate the application of various configurations of air-riding features to various embodiments of sealing arrangement. They are shown here as applied mainly to stepped arrangements, although it is to be understood that any of the exemplified air-riding features shown here may be applied also to other, non-stepped arrangements, including convergent or constriction-including arrangements, of other embodiments already described hereinabove.

Fig. 16 shows the geometry of each of the seal faces of the embodiment sealing arrangement shown in principle in Figure 6(a), which includes a simple radially stepped configuration of the seal faces to create the respective pressure reduction zones radially therealong. As shown here, the height of the step 63 (or 73, in the case of the other seal face) (in the axial direction) which delimits the first and second subfaces 62, 64 (or 72, 74 in the case of the other seal face) is represented as $s$ and the respective radial lengths of the first and second subfaces 62, 64 (or 72, 74 in the case of the other seal face) are represented as $r_1$ and $r_2$.

Fig. 17 shows the geometry of one example of an air-riding feature which may be applied to or incorporated into the seal faces of the basic arrangement of Fig. 16 to further enhance its functionality by creating or encouraging a stiffer air film which flows over the seal face surfaces during use. As shown here, the stepped arrangement comprises a double or bi-directional step configuration, incorporating both a pressure-reducing radial step component 963R - which corresponds in principle to the radial step 63 of the basic arrangement of Fig. 16 - and an air-riding circumferential step component 963C. The height (in the axial direction) $s_1$ of the radial step component 963R is greater than the height (in the axial direction) $s_2$ of the circumferential step component 963C, whilst the radial lengths of both step components 963R, 963C are the same, i.e. $r_1$.

Fig. 18 shows the geometry of another example of an air-riding feature which may be applied to or incorporated into the seal faces of the basic arrangement of Fig. 16 to further enhance its functionality by creating or encouraging a stiffer air film which flows over the seal face surfaces during use. As shown here, the stepped arrangement comprises a stepped wedge configuration, incorporating both a pressure-reducing radial step component 963R - which again corresponds in principle to the radial step 63 of the basic arrangement of Fig. 16 - and an air-riding circumferential wedge component 963W.

Fig. 19 shows the geometry of an example of air-riding features which may be applied to or incorporated into the seal faces of the basic arrangement of Fig. 16 to further enhance its functionality by creating or encouraging a stiffer air film which flows over the seal face surfaces during use. As shown here, the stepped arrangement comprises a stepped grooved, especially a stepped herringbone grooved, configuration, incorporating both a pressure-reducing main radial step component 963R - which again corresponds in principle to the radial step 63 of the basic arrangement of Fig. 16 - and a herringbone grooved component 963H applied to the first subface 962 of the seal face. The height (in the axial direction) $s_1$ of the main radial step component 963R is greater than the height (or depth) (in the axial direction) $s_2$ of the herringbone grooves 963H. The configuration of the herringbone grooves is such as to create or encourage a pressure rise in the grooved subface with rotational speed of the sealing fin or disc, thereby leading to a greater level of pressure reduction as air (or other fluid) passes along the respective clearance gaps defined between the respective stepped-grooved seal faces and the sealing fin or disc.

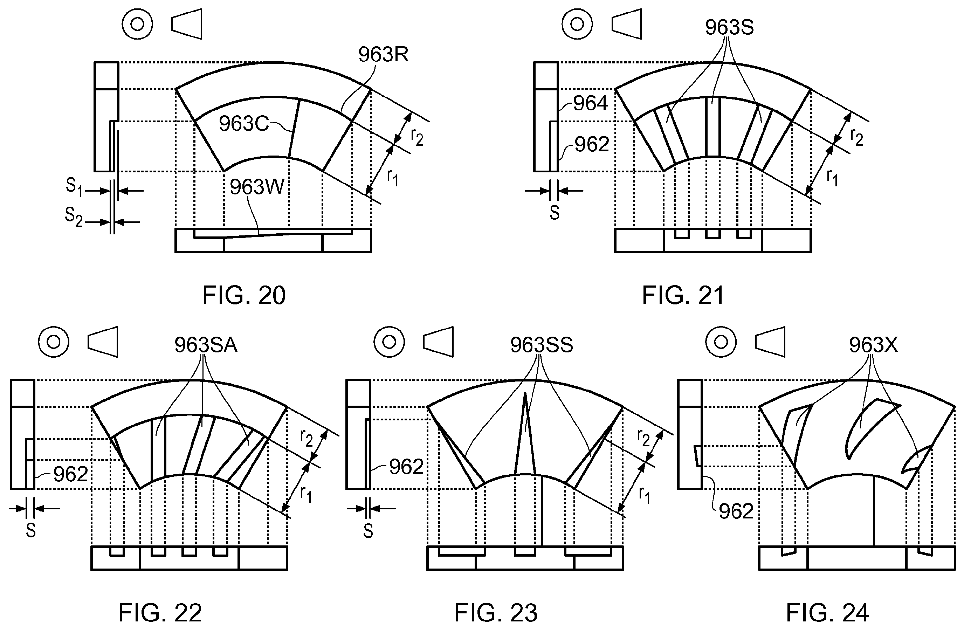

Fig. 20 shows the geometry of another example of an air-riding feature which may be applied to or incorporated into the seal faces of the basic arrangement of Fig. 16 to further enhance its functionality by creating or encouraging a stiffer air film which flows over the seal face surfaces during use. As shown here, the stepped arrangement comprises a combination double or bi-directional step and wedge configuration, incorporating a combination of a radial step 963R - which again corresponds in principle to the radial step 63 of the basic arrangement of Fig. 16 - and a circumferential step component 963C incorporating a circumferential wedge component 963W. The height (in the axial direction) $s_1$ of the radial step component 963R is greater than the height (in the axial direction) $s_2$ of the circumferential step component 963C, whilst the radial lengths of both step components 963R, 963C are the same, i.e. $r_1$. The circumferential wedge component 963W acts as a ramp portion between the two planar levels either side of the circumferential step feature.

More generally, in the context of embodiments which utilise a stepped arrangement to create the respective pressure reduction zones in the respective clearance gaps, the necessary behaviour of a radial step (as exemplified in many of the preceding embodiments) for the proper functioning of the sealing arrangement may be achieved not only by the provision of a "full" step in which material is in effect removed from the seal face (to a required height) to a "complete" circumferential extent so as to define a full step width across the required circumferential distance, but it may also be achieved by the provision of one or more discrete "partial" step portions in which material is in effect removed from the seal face (to a required height) in only one or more selected circumferential regions or areas.

An example of such a partial stepped arrangement is illustrated in the embodiment shown in Fig. 21. Here an array or series of regularly spaced (or optionally irregularly spaced, if that should be desired or appropriate) cut-outs, channels or slots 963S are formed in the first, generally planar subface 962 of the respective seal face. Each cut-out, channel or slot 963S has a depth $s$ and a radial extent $r_1$ (as for the "complete" steps of the various earlier embodiments), with the radially upper (as shown in the drawing) end of each cut-out, channel or slot 963S forming its own discrete partial step where it meets the boundary with the generally planar second (i.e. non-cut-out) subface 964 of the seal face. Each cut-out, channel or slot 963S may extend in a generally radial direction, as shown in Fig. 21, so that in the case of an arcuate circumferential extent of the sealing arrangement the cut-outs, channels or slots 963S are arranged in a fan-like configuration. Each cut-out, channel or slot 963S may for example be generally cuboidal in shape, and/or may have parallel sides, although other internal or external shapes may be possible.

A modified example of such a partial stepped arrangement is illustrated in the embodiment shown in Fig. 22. This example embodiment is closely similar in form and function to that of Fig. 21, except that here the respective cut-outs, channels or slots 963SA do not extend in a radial direction, but each is angled relative to the radial direction e.g. at an angle of a few degrees, such as in the approximate range of from about 2 or 3 or 5 or 10 up to about 20 or 30 or 40 or 50 or even as much as 60 degrees, relative thereto.

Furthermore, although such cut-outs, channels or slots 963S, 963SA may in some example cases be parallel-sided or cuboidal in shape (especially in internal shape), it is possible in other example embodiments for such cut-outs, channels or slots to have at least one pair of sides (especially at least their longitudinal extending pair of sides) non-parallel to each other in at least one plane, preferably at least a plane parallel to the general plane of the first subface 962. An example of such an arrangement is that illustrated in the embodiment shown in Fig. 23. Here the array of cut-outs, channels or slots 963SS are arranged in a starfish-like configuration. Such cut-outs, channels or slots 963SS may nevertheless have substantially rectangular internal transverse cross-sections, although they may have triangular or even other shaped internal transverse cross-sections if desired or appropriate.

Furthermore, it is possible that any such cut-outs, channels or slots 963S. 963SA, 963SS may have side walls, especially longitudinal side walls, which are modified in shape so as to be non-parallel to each other, and/or non-straight/non-planar, e.g. curved, arcuate, convoluted or angled (i.e. containing at least one non-180° angle). An example of such an arrangement is that illustrated in the embodiment shown in Fig. 24. Here the respective cut-outs, channels or slots 963X are generally angled relative to the radial direction (like those of Fig. 22 in general terms), but at the same time have curved or arcuate longitudinal side walls, which latter may optionally even be non-parallel in one or two orthogonal planes so that each cut-out, channel or slot 963X optionally takes the form of a groove with varying width therealong and/or a non-rectangular (e.g. triangular) transverse cross-section. Once again, the configuration of these specially shaped cut-outs, channels or slots 963X may be such as to create or encourage a pressure rise in the cut-out/channelled/slotted subface 962 with rotational speed of the sealing fin or disc, thereby leading to a greater level of pressure reduction as air (or other fluid) passes along the respective clearance gaps defined between the respective seal faces and the sealing fin or disc.

In variants of any of the embodiments shown in any of Figs. 16 to 20 and discussed above, any number of small cut-outs, channels or slots, e.g. of a corresponding or similar size, form and/or configuration to those (e.g. 963X) discussed above in relation to Fig. 24 for example (or perhaps even those discussed in relation to any of Figs. 21 to 23 for example) may also be applied to any of the $r_2$ zones depicted in any of Figs. 16 to 20, or alternatively they may be applied to any of the $r_1$ zones thereof, or further alternatively they may be applied to both of any of the $r_2$ zones and $r_1$ zones thereof.

Although the above-described air-riding and/or partial step features of the embodiments of Figs. 16 to 24 have been referred to and illustrated in terms of being applied to the respective seal faces of the seal portions of the frame, especially those seal faces which are parallel to each other to either side of the sealing fin or disc, it is to be understood that any one or more of these air-riding and/or partial step features may alternatively (or even additionally) be correspondingly applied to or incorporated in the side faces of the sealing fin or disc 20 itself. Furthermore it is also to be understood that any one or more of these air-riding and/or partial step features may alternatively (or even additionally) be correspondingly applied to or incorporated in not only parallel seal faces or sealing fin/disc side faces, but also in non-parallel such arrangements such as the "wedged" or "coned" arrangements described above and illustrated in principle in Fig. 15.

Turning now to other embodiment forms of sealing arrangement, and referring back to the generalised basic arrangement as illustrated in Figs. 3(a) and (b), the slider mechanism 80 via which the frame 40 is mounted on the second structure 15, e.g. a portion of an engine casing, is generally required to allow a relative sliding axial translational movement of the frame 40 of the sealing arrangement such that the frame 40 can "follow", i.e. self-centre itself with respect to, the sealing fin or disc 20 if or when the latter moves axially relative to the frame 40 or engine casing 15, e.g. as a result of thermal expansion or the application thereto of particular directed loads. Preferably the slider mechanism 80 may also be designed to resist, or even substantially prevent, relative radial translational movement of the frame 40 and/or relative rotation of the frame 40 about a radial axis perpendicular to the axial direction of the arrangement (along which the frame 40 is translationally slidable relative to the engine casing 15).

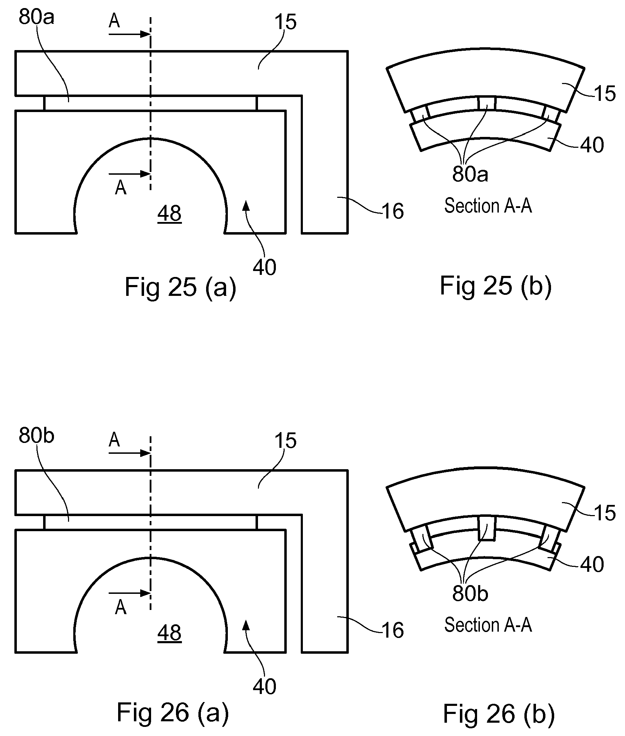

Various embodiment forms of the sliding mechanism 80 are illustrated, by way of example only, in Figs. 25, 26, 27 and 28:

In the arrangement of Figs. 25(a) and (b) the slider mechanism 80 comprises a series of a plurality of discrete, parallel, circumferentially and uniformly arranged linear bearings 80a. Each linear bearing 80a permits an axial sliding movement of the frame 40 relative to the engine casing 15, preferably with low-friction.

In the arrangement of Figs. 26(a) and (b) the slider mechanism 80 comprises a series of a plurality of discrete, parallel, circumferentially and uniformly arranged tongue-and-groove-type arrangements 80b, each of which again permits an axial sliding movement of the frame 40 relative to the engine casing 15, preferably with low-friction.

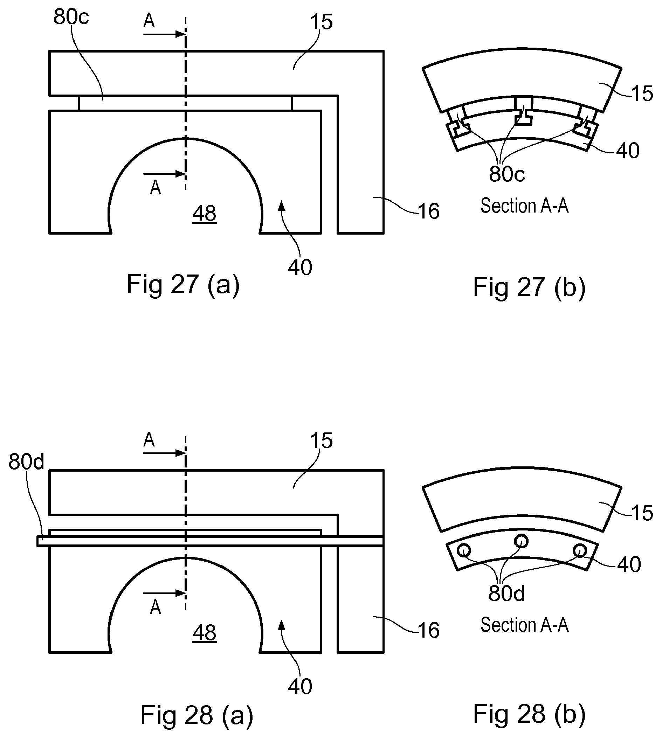

In the arrangement of Figs. 27(a) and (b) the slider mechanism 80 comprises a series of a plurality of discrete, parallel, circumferentially and uniformly arranged complex-cross-sectioned tongue-and-groove-type arrangements 80c, each of which again permits an axial sliding movement of the frame 40 relative to the engine casing 15, preferably with low-friction. As shown here by way of example, each tongue-and-groove-type arrangement 80c comprises a complex-shaped tongue, e.g. a T-sectioned rib or tongue, whose exterior shape matches the interior shape of a corresponding complex-shaped groove, channel or slot, e.g. a T-sectioned groove, channel or slot, wherein the relative dimensions of the cooperating or interengaging ribs/tongues and grooves/channels/slots are such as to permit ready sliding of the former within and relative to the latter.

In the arrangement of Figs. 28(a) and (b) the slider mechanism 80 comprises a series of a plurality of discrete, parallel, circumferentially and uniformly arranged dowel guides or slider bars 80d, each of which again permits an axial sliding movement of the frame 40 relative to the engine casing 15, preferably with low-friction. The dowel guides/slider bars 80d may for example be supported on both the circumferential front and rear sides of the engine casing 15, so that both ends of each dowel guide/slider bar 80d are adequately supported and anchored so as to increase the stability and low-friction operation of the sliding mechanism.

As an optional additional feature of any of the slider mechanisms shown in any of Figs. 25, 26, 27 or 28, the respective linear bearings, tongues-in-grooves or dowel guides/slider bars may be provided or fitted with one or more springs or other resilient members. Such springs or other resilient members may serve as a regulating or damping mechanism to help regulate the relative translational movement of the frame relative to the engine casing and, especially, to help prevent or ameliorate any tendency for oscillations in that relative movement to occur or develop.

Other constructions or configurations of "slider" or axial translation mechanism, apart from those illustrated examples discussed above, i.e. any mechanism or device which is constructed and arranged or configured to permit relative translational movement between the frame and the second structure, may be employed in other variant embodiments, specific examples of which will be readily apparent to persons skilled in the art. For instance, such alternative translation mechanisms or devices which may be used in other embodiments may be based on or comprise one or more springs (or other biasing members), or cantilevers, or tethers (e.g. metallic rope attachments, such as from metallic bristle braided rope, or wire filaments) or parallelogram-articulated mechanisms.

In a further development of the fundamental principles, instead of the respective pressure reduction zones between the first and second seal faces of the seal portions of the frame and the respective sides of the sealing member being formed by the special shaping or configuring of the seal faces and/or sealing member sides themselves, whilst the seal portions of the frame are positioned generally substantially opposite each other on either side of the sealing member at a substantially equal or common distance, in a direction substantially normal to the said axis, from that axis, it may be possible for the respective pressure reduction zones to be formed by the relative radial positioning of the seal portions of the frame themselves. Accordingly in such embodiments the seal portions of the frame may be positioned generally radially offset with respect to each other on either side of the sealing member at respectively different distances, in a radial direction, from the axis along which the sealing member is moveable relative to the engine casing. Accordingly, in such embodiments it may be possible for the seal faces of the seal portions of the frame and/or the sides of the sealing member not necessarily to need to have special shapes or configurations - as exemplified in the other embodiments already described above and illustrated in the drawings referred to so far - which are responsible for forming the respective pressure reduction zones. Thus, in such embodiments it may be possible for the necessary pressure reduction zone functionality to be achieved merely by the radially offset relative positioning of the respective seal portions of the frame.

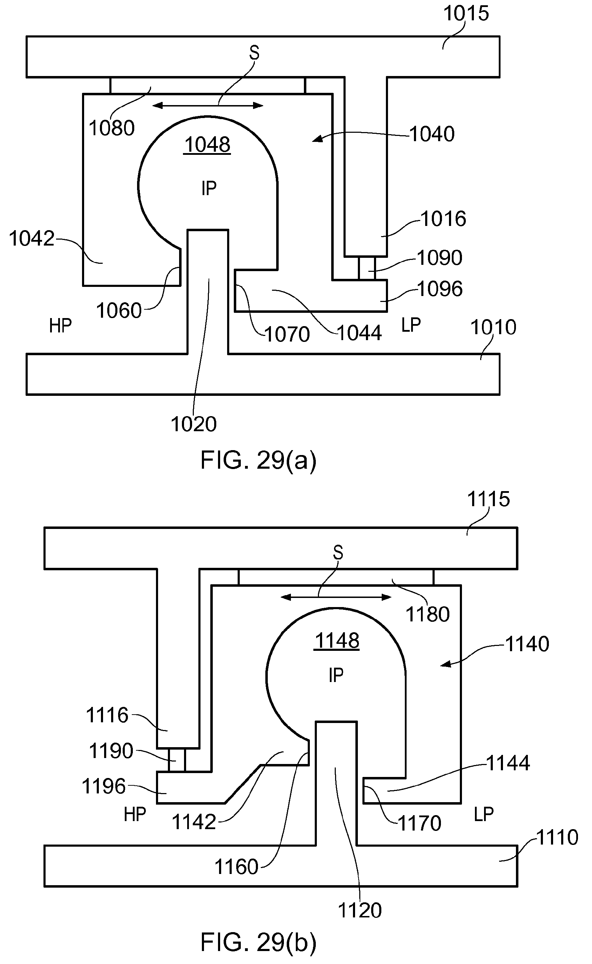

Two examples of such embodiments are shown in Figs. 29(a) and 29(b). Fig. 29(a) corresponds closely in general form and function to the embodiment shown in and described above in relation to Fig. 3(a), and Fig. 29(b) corresponds closely in general form and function to the embodiment shown in and described above in relation to Fig. 3(b): in Fig. 29(a) the secondary seal device is positioned to the low pressure (LP) side of the arrangement, whereas in Fig. 29(b) it is placed to the high pressure (HP) side thereof, but otherwise these two embodiments are the same in form and function.

In each case: the rotatable sealing fin or disc 1020 carried on the rotor 1010, e.g. a turbine shaft, creates a seal between it and the stationary structure 1015 such as a portion of the engine casing. The sealing arrangement is formed by the upstream 1042 and downstream 1044 seal portions of the frame 1040, with the intermediate pressure chamber 1048 being formed within the frame 1040 and between the upstream relatively high pressure (HP) region and the downstream relatively low pressure (LP) region. The double-face sealing arrangement comprises a generally substantially planar upstream seal face 1060 provided on the upstream seal portion 1042 and a generally substantially planar downstream seal face 1070 provided on the downstream seal portion 1044, the upstream and downstream seal faces 1060, 1070 being located to axially opposite sides of the rotating fin or disc 1020 and connected rigidly together via the main body of the frame 1040. Again, the frame 1040 is mounted on the slider mechanism 1080 which allows it to move axially, i.e. generally substantially parallel to the axis of rotation of the rotor 1010, as in the direction of arrow S, and therefore to follow any axially longitudinal movement of the rotor during its use, e.g. as a result of thermal expansion or the application thereto of particular directed loads. The secondary seal 1090, which may be of any of the types described in relation to earlier embodiments, is mounted between a radial extension portion 1016 of the stationary engine casing structure 1015, which extends towards the rotor 1010, and an axially directed extension portion 1096 of the frame 1040. The secondary seal 1090 is located at approximately mid-radial height relative to the seal faces 1060, 1070, so that the system is pressure balanced axially, as explained above in relation to the embodiments of Fig. 3(a) and (b).

However, the difference here with these embodiments of Figs. 29(a) and (b) is that the respective pressure reduction zones are formed by the inherent radial offset positioning of the seal portions 1042, 1044 of the frame 1040 which provide the respective planar seal faces 1060, 1070. As with all the earlier embodiments discussed hereinabove, at least a portion (especially at least a major portion) of the first pressure reduction zone (formed against the first, upstream, seal face 1060) is located relatively distal, in a direction substantially normal to the axis of movement of the rotor 1010, from the rotor 1010, and at least a portion (especially at least a major portion) of the second pressure reduction zone (formed against the second, downstream, seal face 1070) is located relatively proximal, in a direction substantially normal to the axis of movement of the rotor 1010, from the rotor 1010.

By operation of the same or corresponding mathematical principles as discussed above in relation to the embodiments of Figs. 3(a) and (b), the embodiments of Figs. 29(a) and (b) may exhibit the same ability for the frame 1040 to self-centre itself in an axial direction upon axial movement of the sealing fin or disc 1020 relative to the engine casing 1015. In addition, however, these embodiments may have an additional practical advantage in that because of the smaller amount of material needed for forming the frame 1040 itself, together with the absence of specially shaped or configured seal faces 1060, 1070 and/or sealing fin or disc 1020 sides themselves, the overall arrangement may be made with lower weight than many other embodiments such as those discussed hereinabove.

In practical applications of these embodiments of Figs. 29(a) and (b), it may generally be sufficient - for the generation of high enough magnitudes of restorative self-centring forces - for each seal face 1060, 1070 to be substantially planar over its total radial length, so that preferably the seal faces 1060, 1070 do not comprise any step formation, shoulder, lip or other surface feature - especially at, adjacent or towards their respective relatively low-pressure ends - which might otherwise be expected to be needed to create the required pressure drop passing radially therealong (if the wisdom of the preceding embodiments is to be followed). Whilst not wishing to be bound by theory, it may generally be expected that the further the pressure drop is delayed occurring radially along each respective pressure reduction zone, then the larger the restorative forces will be. Thus, introducing in these particular embodiments of Figs. 29(a) and (b) a yet further pressure reduction feature into each pressure reduction zone may be disadvantageous, for the following reasons:

(i) Such very large restorative forces may be too high for the sealing arrangement, which may physically not have sufficient integrity, strength or rigidity to maintain its efficient and proper operation. The $x_u$ parameter in the equations hereinabove (in relation to Figs. 6(e) and (f)) is essentially the mechanical gain of the restorative force system. As $x_u$ tends to $L_u$, so the restorative forces become very large. Small restorative forces result from a small $x_u$.

(ii) A relatively narrow step, shoulder, lip etc on or adjacent a remote radial end of a seal face may be particularly susceptible to physical damage, thereby compromising the proper functioning of the self-centring restorative force system.

(iii) In the case of coincidental or occasional physical contact between one or other of the seal faces and a side of the sealing fin or disc, a larger contact area will reduce any contact pressure, thereby disfavouring smaller area steps, shoulders, lips etc in such circumstances.

(iv) A smaller radial distance, as is characteristic of a step, shoulder, lip etc, along a respective seal face means there is less of a sealing benefit than if such a feature were to be longer, owing to the latter's greater degree of fluid flow restriction, thereby disfavouring smaller area steps, shoulders, lips etc as pressure reduction zone-creating features.

(v) In the case of employment of a relatively somewhat thinner or lighter weight sealing fin or disc, such a component may more easily deflect or bend towards one or other of the seal faces, thereby causing a flow restriction at an unwanted opposite end of the relevant seal face from that intended to have the pressure reduction zone feature thereat, which would therefore tend to turn the system into a non-restorative force system and also introducing unwanted dynamics.

With the above factor (v) in mind, in yet another modified embodiment sealing arrangement, the shape of the seal portions 1060, 1070 of the frame in the arrangements shown in Figs. 29(a) and (b) may be modified such that the radially proximal end (that closest to the rotor 1010 axis) of the upstream seal portion 1060 and/or the radially distal end (that furthest away from the rotor 1010 axis) of the downstream seal portion 1070 is/are chamfered or bevelled where they face the sealing fin or disc 1020.

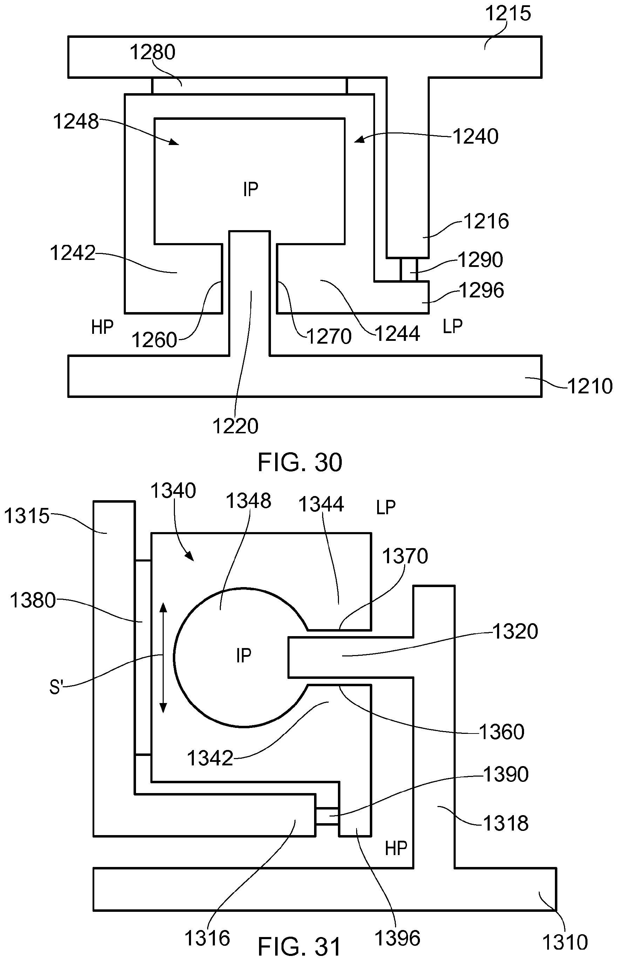

In a further development of the fundamental principles, instead of the intermediate pressure (IP) chamber 48 within the frame 40 being generally circular in cross-section, i.e. generally spherical, cylindrical or toroidal (where the sealing arrangement is fully annular), as shown in the general schematic arrangements of Figs. 3 to 5, the IP chamber or cavity may instead be of any other suitable shape, e.g. rectangular in cross-section or cuboidal or rectangular-toroidal in shape. An example of this arrangement is shown in Fig. 30, where reference numerals corresponding in form and function to those of preceding embodiments are again incremented by another 100.

In the employment of IP chambers of any shape or configuration, the size of the IP zone (e.g. 1248 in Fig. 30, but other reference numerals as applied to other embodiments) may be dictated by the dynamics of the system. For example: If a rapid response to translation of the sealing fin or disc (e.g. 1220, etc) is required or a rapid response to sudden changes in HP or LP pressures is required, then the fill volume of the IP zone (e.g. 1248, etc) may need to be reduced. When both the sealing faces (e.g. 1260 and 1270, etc) have a tighter (smaller) nominal gap than normal, then the speed at which pressure rises or falls in the IP zone (e.g. 1248, etc) will be reduced, so the fill volume of the IP zone (e.g. 1248, etc) may need to be reduced. It is evident, therefore, that the size of any of the IP zones which are illustrated in any of the Figures shown in the accompanying drawings and discussed herein is to be understood as being only schematic and may not necessarily be representative of the actual size or scale (especially relative to other components or component parts of the arrangements) once frequency response design considerations have been taken into account.

In any of the above-discussed and illustrated embodiment sealing arrangements, although they have been shown generally as having a limited circumferential extent (circumferential being relative to the axis of the arrangement), it is to be understood that any of the seal arrangements may be continuous in that circumferential direction and over any desired angle, such as of any angle from 1 to 360°, therearound. Alternatively, any such sealing arrangement may be segmented, whereby a plurality of individual discrete sealing arrangements of a limited circumferential angular extent may be assembled together segmentally into a complete e.g. arcuate, annular or toroidal overall sealing arrangement or apparatus.

Particularly in the case of a sealing arrangement or apparatus being circumferentially segmented, it may be possible for it to be constructed with a degree of structural flexibility between individual segments and/or with different segments exhibiting different restorative force characteristics, in order to allow different (e.g. adjacent) segments to act independently of each other and provide different restorative force properties or behaviours at or in different circumferential sites or regions of the overall sealing arrangement or apparatus.

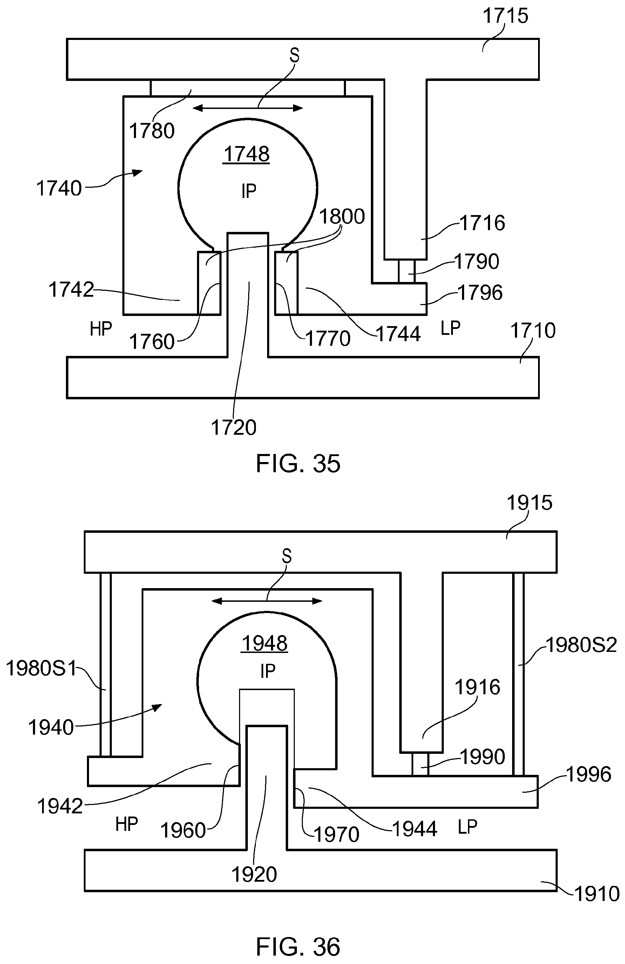

Accordingly, in the employment of a segmented arrangement, the frame segments may be substantially independent and therefore mounted independently, or they may be semi-independent and therefore mounted semi-independently in such a way that the joints between the segments have some, e.g. one or more, of the six degrees of freedom constrained. Generally the frame segments may be free to translate axially, constrained not to translate radially, and relatively stiff circumferentially (all relative to the engine casing support to which the frame is mounted). The rotational stiffness may be high in the axial plane, high in the circumferential plane and relatively stiff in the radial plane. When segments are semi-independently mounted, the joint degrees of freedom (i.e. one segment relative to the adjacent segment) may be such that the segments are constrained relatively axially and radially and relatively flexible circumferentially and with some relative rotational stiffness in the axial plane, high relative rotational stiffness in the circumferential plane and low relative rotational stiffness in the radial plane. Such a relationship between semi-independent segments may be created by use of one or more segment articulation mechanisms. For example, a three-point mounting may be employed where two mounts are on one circumferential end of the frame segment, as shown for example in the embodiment of Fig. 36, and the third mount is between the circumferential segments on the other circumferential end of the frame segment. The mount between segments may comprise a spring (or cantilever), a ball in two slots (each slot being formed from the adjacent segment), a flexible strip seal located between grooves on both segments, or a garter spring around the edge of the segments to contain all the segments, or any other mechanically or functionally equivalent articulation mechanism to any of the aforesaid.

Further in segmented designs, the secondary seal device may provide an additional means by which damping of the movement of the frame relative to the engine casing may be achieved, especially by virtue of including and taking advantage of inter-segment shear forces in segmented seal arrangement/apparatus designs.

In another development of the fundamental principles, in yet another embodiment sealing arrangement, the whole arrangement - save for the axis of rotation of the rotor carrying the sealing member - may be rotated through an angle of up to 90° (or perhaps even greater than 90°), so that the axis of operation of the self-centring forces is longer substantially parallel to the axis of the arrangement along which the rotor is moveable relative to the second structure (e.g. engine casing). An example of such an alternative embodiment is shown in Fig. 31, where again reference numerals corresponding in form and function to those of preceding embodiments are again incremented by another 100.

To achieve this alternative, rotated embodiment, the rotatable rotor 1310 which in other embodiments carries the sealing fin or disc 1320 directly, now carries it indirectly via a radial rotor extension, leg or flange 1318, and it is this rotor extension, leg or flange 1318 which now constitutes the "first structure" of the sealing arrangement which is moveable now along an axis which too has now been rotated though 90°. Alternatively, in a further modified version of this arrangement, such a radial rotor extension, leg or flange 1318 may be absent and the sealing fin or disc 1320 may be constituted by an end of a cylindrical rotor land, such that in a modification to the arrangement depicted in Fig. 31 the sealing fin or disc 1320 may extend solely horizontally.

Thus, in the context of a gas turbine engine, where the rotor 1310 remains parallel to the general longitudinal axis of the engine, the axis defined by the rotor extension, leg or flange 1318 now becomes the "axial direction" which defines the rest of the form and function of the sealing arrangement as discussed above.

Thus, in the case of a notional rotation of the arrangement through 90° to arrive at the oriented arrangement as in Fig. 31, the general plane of the sealing fin or disc 1320 may thus become parallel to the general longitudinal axis of the engine, rather than perpendicular thereto, and the seal faces 1360, 1370 of the seal portions 1342, 1344 of the frame 1040 may thus be placed radially (now meaning radially relative to the general longitudinal axis of the engine) to either side (i.e. radially inside of and radially outside of) the now axially (now meaning axially relative to the general longitudinal axis of the engine) oriented sealing fin or disc 1320.

Accordingly, in this orientational configuration of the sealing arrangement of Fig. 31, the self-centring restorative force system acts to accommodate any radially (now meaning radially relative to the general longitudinal axis of the engine) perturbing relative movement of the sealing fin or disc 1320-carrying rotor 1310 relative to the static engine casing 1315.

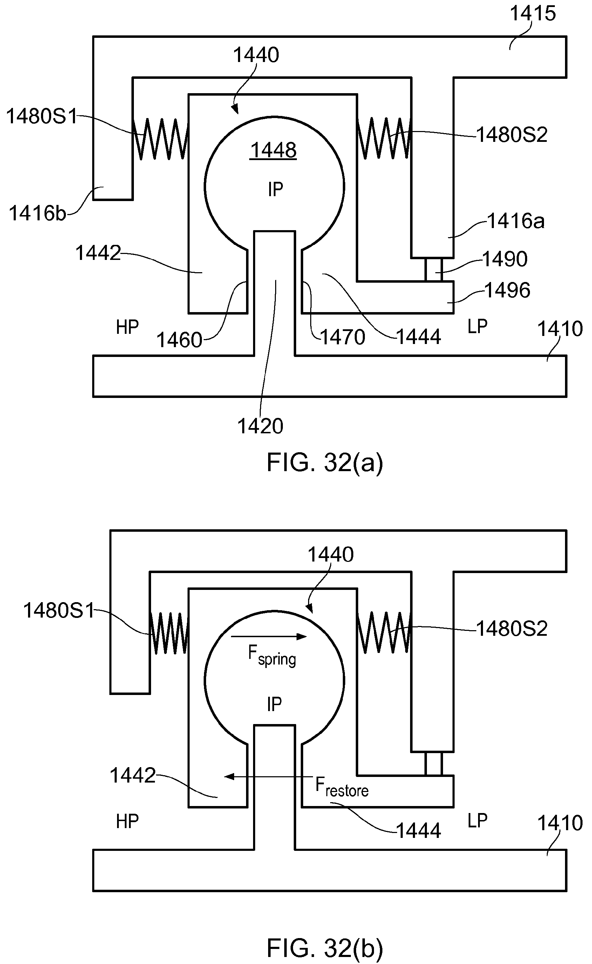

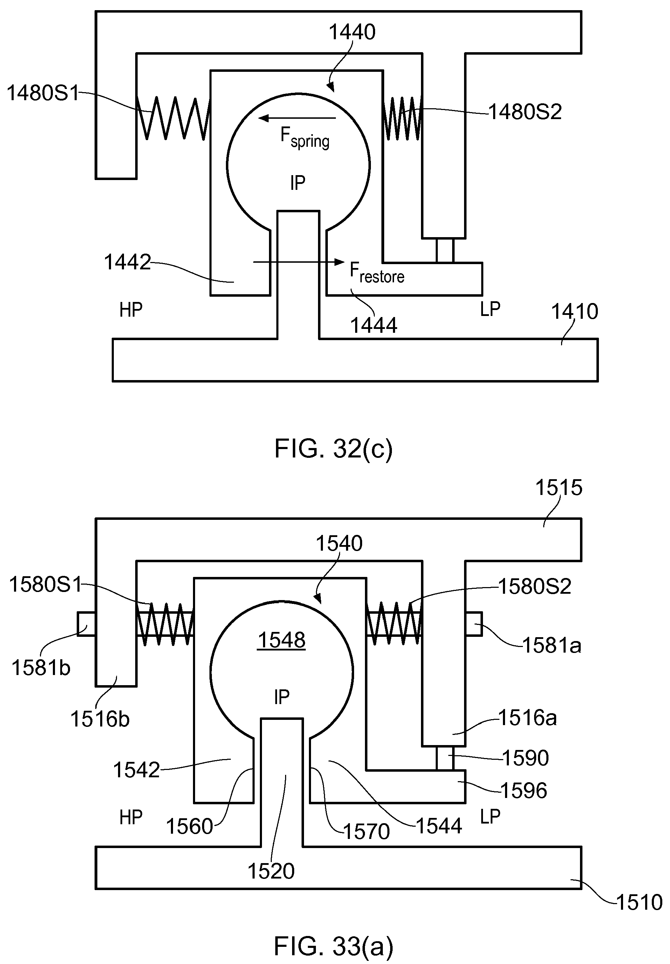

In yet another development of the fundamental principles, in a yet further embodiment sealing arrangement, the slider mechanism by which the frame is axially translatable relative to the second structure (e.g. engine casing) may be modified so as to include oppositely biased resilient members, e.g. springs, to contribute to the overall self-centring mechanism. An example of such an alternative embodiment is shown in Figs. 32(a), (b) and (c), where again reference numerals corresponding in form and function to those of preceding embodiments are again incremented by another 100.

In this variant embodiment the slider mechanism now utilises biasing forces through the inclusion of opposing e.g. coil springs 1480S1, 1480S2 which themselves centre the frame 1440 of the sealing arrangement relative to a datum point on the engine casing 1415. Thus, in its simplest form, this variant embodiment employs a slider mechanism which comprises opposed biased springs 1480S1, 1480S2 that permit axial movement of the frame 1440 and resist radial movement thereof. When in operation, the restorative forces generated by the self-centring seal mechanism may be designed to be sufficient to overcome the biasing forces that the opposing springs 1480S1, 1480S2 exert into the system and thus to maintain the preferred non-contact conditions between the sealing fin or disc 1420 and the respective seal faces 1460, 1470.

During operation, the rotor 1410 may move axially relative to the casing 1415, as shown in Fig. 32(b) or 32(c). The additional off-centre biasing force from the springs 1480S1, 1480S2 may be balanced by the restorative force from the self-centring seal mechanism itself originating at the seal faces 1460, 1470 (as fully described hereinabove in relation to other embodiments). This is shown schematically in Figs. 32(b) and 32(c) for the cases where the rotor 1410 moves in two different axial directions. $F_{spring}$ is equal to $F_{restore}$.

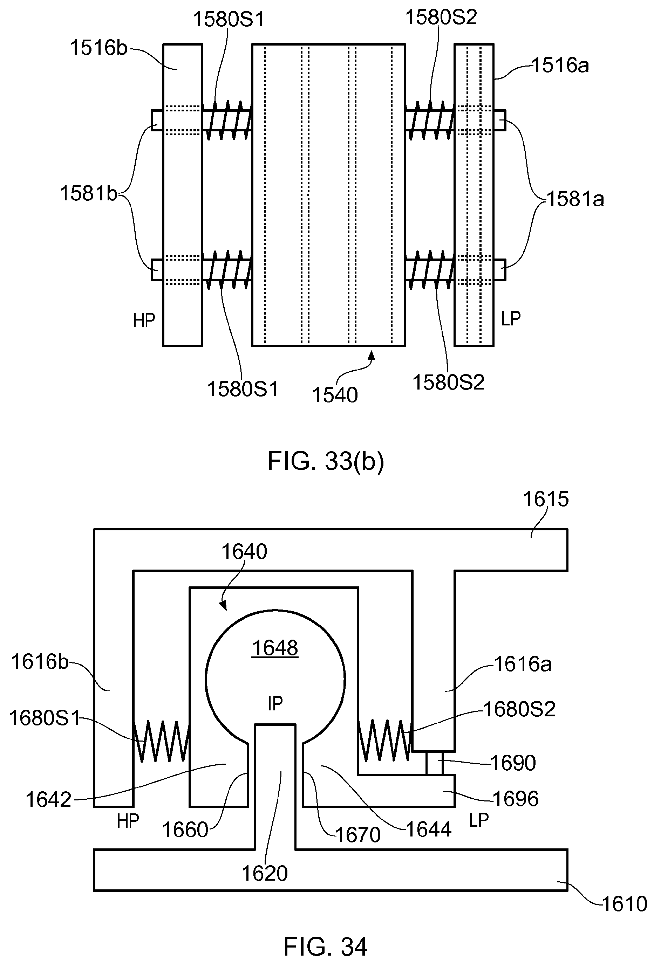

The action of the springs 1480S1, 1480S2 is such as to resist radial movement of the frame 1440, but permit axial movement thereof. However, and as shown in the yet further variant embodiment of Figs. 33(a) and (b) (where again reference numerals corresponding in form and function to those of preceding embodiments are incremented by another 100), if desired or necessary, one or more guides may be used with coil springs 1580S1, 1580S2 to eliminate or reduce any radial movement that they might otherwise produce. Fig. 33(a) shows a cross-sectional view of such a further embodiment, and Fig. 33(b) shows a plan view thereof.

Alternative types of springs that may be used in the preceding embodiments of Figs. 32 and 33 may include wave springs or leaf springs. These may be mounted circumferentially or alternatively mounted radially.

The radial position of the springs in these embodiments may also be varied. Fig. 34 (where again reference numerals corresponding in form and function to those of preceding embodiments are incremented by another 100) shows yet another example embodiment in which the springs 1680S1, 1680S2 are positioned radially closer to the position of the secondary seal 1690. Therefore the spring force and the restorative force may now be much closer together radially and this may reduce the additional moment on the sealing arrangement. In fact, it may even be possible, and advantageous, to arrange the springs 1680S1, 1680S2 in this type of arrangement such that they actually radially align with the radial position of the secondary seal 1690, so that the restorative force is aligned with the spring force such that there is no additional moment due to the springs 1680S1, 1680S2 acting on the frame 1640.

Thus, in summary, in all the spring-incorporating embodiments of Figs. 32, 33 and 34, the opposing springs on the upstream and downstream sides of the sealing arrangement allow it to self-centre relative to a central datum on the engine casing. During engine operation, differential axial movements between the rotor and the casing may require the sealing arrangement to move axially relative to its nominal datum. This movement is generated by the restorative force that arises at the seal faces and the opposing springs may permit this movement across the differential movement range of the engine. As the sealing arrangement is required to move away from its datum, an additional load from the springs is present which tries to move it back to its nominal datum position. However, the restorative force from the self-centring seal face mechanism may be designed to exceed the bias spring load such that there is little risk of the seal faces touching the sealing fin or disc during operation.

The opposing springs may allow for a method of sealing arrangement movement which avoids or ameliorates the problems associated with a sliding interface, such as jamming, fretting, dirt and dust ingress. They may also be somewhat mechanically simpler to implement in practice than a sliding movement structure.

A stiffer spring system may be considered if the sealing fin or disc on the rotor has some axial movement accommodation potential.

In the embodiments of Figs. 32, 33 and 34 the springs are devices that exert a linear force versus displacement characteristic, and as such they may be any of a variety of geometries, e.g. coil springs, wave springs, leaf springs, as well as other known spring types. There may be circumstances when a non-linear force versus displacement characteristic is acceptable. For instance, if the stiffening of the spring with movement can still be accommodated without the seal faces touching the sealing fin or disc at the axial movement limits, then a non-linear spring type may be expected to perform well.

Furthermore, and as with other embodiments discussed hereinabove, even in such spring-employing embodiments as those of Figs. 32, 33 and 34, the sealing arrangement could be segmented rather than continuous. If the sealing arrangement were to be continuous, then the arrangement may be designed to be flexible such that different circumferential positions may act independently of one another with different self-centring force characteristics. If however the sealing arrangement were to be segmented, then independent springs may be aligned with the independent segments. Alternatively the springs may attach to any number of different segments directly or via a spring-holding ring or one or more segment bands. Such a spring-holding ring or segment band(s) may be annular (i.e. continuous) or may itself be segmented (if segmented, then it may be fixed to at least some of the segments and preferably may overlap with at least some of the segments - i.e. the segment band start may be in the middle of a segment and the end thereof may be in the middle of another segment). A spring-holding ring may be just the size of the springs or may extend across more of the segment face up to a full radial height of the frame of the arrangement. Moreover, there may even be a plurality of discrete bands at different radial locations, or possibly just one thereof. The segment bands may be additionally used to provide sealing between the segments. Thus, an additional segment band on the radial outer cylindrical face may be applied possibly to give improved sealing. Such segmentation may be such that the individual segments abut each other with a small gap therebetween or the segmentation may be such that they overlap each other to further reduce leakage flow.

In still yet another development of the fundamental principles, in a still yet further embodiment sealing arrangement, as shown in Fig. 35 (where again reference numerals corresponding in form and function to those of preceding embodiments are incremented by another 100), the upstream seal face 1760 and the downstream seal face 1770 may each be provided on or by a respective discrete or separate component 1800 forming part of the respective seal portion 1742, 1744 of the frame 1740. This allows the seal faces 1760, 1770 to be designed specifically and only for the purposes of making a suitable face seal. Thus, the material used for the seal faces 1760, 1770 may be different from that used for the remainder of the frame body and/or seal portions 1742, 1744 thereof (which has to be able to move and be a pressure vessel as well). Advantageously, the seal faces 1760, 1770 may therefore be replaceable if a repair is required, e.g. following a contact event.

As illustrated in Fig. 35, the sealing arrangement of this embodiment incorporates replaceable inserts 1800 at the seal face locations, to provide a more economical solution for maintenance. These inserts 1800 may if desired be manufactured with pressure-raising and/or air-riding features, such as any of the kinds described and discussed hereinabove in relation to Figs. 16 to 24. Furthermore, if such features are included on the sealing fin or disc instead or additionally, that may enable such simpler parts to be replaced as or when required. The material of these inserts 1800 may for example be any suitable non-metallic material (such as carbon or ceramic) or the inserts 1800 may comprise a low-wear coating.

Thus, in summary, in the embodiment of Fig. 35, replaceable inserts 1800 of similar or dissimilar material to the frame 1740, and with or without pressure-raising and/or air-riding features, may permit more economical maintenance over the life of the sealing arrangement. This may even be used as a means of introducing preferential wear. Furthermore, making the seal faces 1760, 1770 separate from, rather than integral with, the seal portions 1742, 1744 of the frame 1740 may also enable greater choices to be made for design and repair of the components of the self-centring sealing arrangement as a whole. In the case of wear limits to the frame 1740 being exceeded, or if wear limits are reached according to a preferential wear design, replaceable inserts 1800 may simplify and cost-reduce the seal maintenance process. Similarly the inserts 1800 may enable a dissimilar (e.g. harder-wearing) material such as ceramic to be used for increased durability.

The replaceable seal inserts 1800 may be annular rings or may be segments. They may be screwed into the bodies of the respective seal portions 1742, 1744 or attached by other means, e.g. suitable adhesive or mechanical locking means.

Furthermore, and as with other embodiments discussed hereinabove, even in such an inserts-employing embodiment as that of Fig. 35, the sealing arrangement could be segmented rather than continuous. If the sealing arrangement were to be segmented, then the replaceable seal inserts 1800 may also preferably be segmented, although it may be possible to use a plurality of discrete inserts per seal segment. The replaceable seal inserts 1800 may also be applied as annular rings to a segmented sealing arrangement, provided the replaceable inserts 1800 are sufficiently flexible.

Moreover, such replaceable inserts 1800 may be easily designed to accommodate the anticipated running shape of the sealing fin or disc 1720 on the rotor 1710. This may provide a simpler and cheaper alternative to manufacturing a rotor with a profiled or tilted sealing fin or disc.

In a further modification, one or more pressure channels may be incorporated into the inserts 1800, so as to provide a higher pressure supply of air (or other fluid) to the sealing interfaces and encourage some hydrostatic pressure enhancement or purging of any hydrodynamic features.

Turning to the embodiment of Fig. 36, in this arrangement the translating mechanism which enables the frame 1940 to be axially translatable relative to the second structure 1915 (e.g. engine casing) comprises a pair (or any suitable number or plurality) of springs or other biasing members 1980S1, 1980S2 located either side of the secondary seal 1990, and the intermediate pressure chamber 1948 is substantially compartmentalised circumferentially. The arrangement of this embodiment may be segmented or fully annular, for example.

In various configurations of this embodiment the translating mechanism comprising the springs 1980S1, 1980S2 may be placed either side of the secondary seal 1990, and the springs 1980S1, 1980S2 themselves may be arranged in either a radial orientation, as depicted in Fig. 36, or alternatively in a circumferential orientation.

The annular intermediate pressure chamber or cavity 1948 is divided into a plurality of circumferentially arranged zones (see Fig. 38 discussed below) with baffles or dividers between them. The baffles or dividers cannot extend completely across the chamber 1948, because the sealing fin or disc 1920 rotates into the intermediate pressure chamber 1948. Therefore the baffles/dividers are as blocking as possible without risking contact between the baffle/dividers and the rotating sealing fin or disc 1920.

The reason why it may be advantageous to employ a compartmentalised intermediate pressure chamber 1948 may be understood by considering the sealing fin or disc 1920 being at a swash angle so that for every revolution of the fin or disc 1920 the frame 1940 at some local position may need to move backwards and forwards a short distance. At the other side from that local position (the far position), the frame 1940 there may need to move forwards and backwards oppositely to the local position. Thus the intermediate pressure chamber 1948 may desirably set its intermediate pressure (IP) to respond primarily to the local position.

This compartmentalisation may be useful whether the frame 1940 is segmented or fully annular. If segmented, the local forces from compartmentalisation may make the local segment move based on the local position, because the intermediate pressure (IP) is substantially governed by the local flow through the first and second seal positions defined by the respective seal faces 1960, 1970. If fully annular, the local forces from compartmentalisation may also be based on the local position and local intermediate pressure, but the movement of the annular frame ring structure may be a result of the integrated result, so part of the frame may be forced to move more than other parts thereof. While a fully segmented frame may theoretically cope with irregularities greater than once per revolution, a fully annular rigid frame may only be able to cope with at most a once per revolution scale irregularity such as swash. In most practical senses, it may be highly unusual for high frequency irregularities (except close to blading, where a fully segmented approach may be preferred) and the normal level of swash, for which compartmentalisation may be primarily aimed, may be small but not negligible (therefore allowing the choice of either a fully segmented or a fully annular approach). The axial translation requirement may be dominated by the bulk axial translation of the frame relative to the sealing fin or disc 1920 on the rotor 1910 with a small superimposed swash contribution.

Turning to the embodiment of Fig. 37, in this arrangement the first and second seal portions 2042, 2044 carry a pair of radially offset compliant seals 2064, 2074 and the intermediate pressure chamber 2048 is substantially compartmentalised circumferentially and the volume of the chamber 2048 is reduced, and the pair of secondary seals 2090A, 2090B provide locating positions for the annular frame 2040 (wherein one of the secondary seals 2090A, 2090B may be principally a locating device and not a true seal, hence the optional presence in this arrangement of one or more fluid by-pass hole(s) 2099).

The embodiment actually depicted in Fig. 37 may be for a fully annular arrangement. The sliding mechanism here is actually provided merely by virtue of radial locating on what in practice may be fairly low friction secondary seals 2090A, 2090B. Two such secondary seals 2090A, 2090B are shown. However, one of them may not actually carry a pressure drop because of the large bypass hole(s) 2099 and may therefore be just a radial locating device. In this embodiment of Fig. 37 the annular intermediate pressure chamber 2048 may be small to allow for the arrangement to effect a rapid response. Moreover, the intermediate pressure chamber 2048 may be compartmentalised (again as shown and discussed below in relation to Fig. 38) to restrict circumferential flow around the annular intermediate pressure chamber 2048. It is to be understood that Fig. 37 is schematic only and assembly of the seal arrangement may be effected, for example, by virtue of two halves (HP and LP sides) of the frame 2040 being joined together once the rotor fin or disc 2020 has been located. Specific practical details of various such assembly methods will be readily apparent to persons skilled in the art.

Turning to Fig. 38, this is a simplified schematic axial view of a substantially compartmentalised intermediate pressure chamber 2148 of an overall circumferential (e.g. segmented or fully annular) arrangement showing a plurality of baffle plates or scallops 2200 that divide the intermediate pressure chamber 2148 to make it more difficult for circumferential flow to occur around the chamber 2148 compared with flow via the first and second seal portions/faces of the sealing arrangement.

Thus, Fig. 38 shows an axial front (or rear, which corresponds thereto) view of the annular intermediate pressure chamber 2148 of a fully segmented or fully annular design with baffles/dividers 2200 showing the circumferential compartmentalisation of this intermediate pressure chamber 2148. The baffles/dividers 2200 may be configured as relatively thin sheets or may be of thicker plate material, or may be cut out of the frame itself (i.e. "scalloped"). The baffles/dividers 2200 may include an abradable inner surface or honeycombed inner surface structure to allow the sealing fin or disc to cut into it when radial excursions occur. The baffles/dividers 2200 may if desired include small compliant seal tufts of low stiffness, such as bristle tufts, and/or they may include radially sprung sealing elements that allow sealing fin/disc contact. Generally, it may be desirable that the leakage across each baffle/divider may be approximately similar to or more restricted than the leakage across the more open of the seal gaps at the locations of the first and/or second seal faces of the sealing arrangement. Furthermore, if desired there may be many baffles/dividers 2200 placed around the circumference of the arrangement, in order to reduce the circumferential pressure drop across any one baffle and make flow from one side of the seal very difficult to pass to the opposite side of the seal compared with flow through the more open of the seal gaps at the locations of the first and/or second seal faces.

It is to be understood that the above description of various embodiments has been by way of non-limiting examples only, and various modifications may be made from what has been specifically described and illustrated whilst remaining within the scope of the invention as defined in the appended claims.

Throughout the description and claims of this specification, the words "comprise" and "contain" and variations of the words, for example "comprising" and "comprises", mean "including but not limited to", and are not intended to (and do not) exclude other moieties, additives, components, integers or steps.

Throughout the description and claims of this specification, the singular encompasses the plural unless the context otherwise requires. In particular, where the indefinite article is used, the specification is to be understood as contemplating plurality as well as singularity, unless the context requires otherwise.

Furthermore, features, integers, components, elements, characteristics or properties described in conjunction with a particular aspect, embodiment or example of the invention are to be understood to be applicable to any other aspect, embodiment or example described herein, unless incompatible therewith.

**Claims**

1.   A sealing arrangement (30) for providing sealing between a first structure (10) and a second structure (15) of an engine, and between first (HP) and second (LP) pressure regions located between the first (10) and second (15) structures, the first pressure region (HP) being at a relatively higher pressure than the second pressure region (LP), and the first structure (10) being moveable relative to the second structure (15) along an axis, wherein the sealing arrangement (30) comprises: a sealing member (20) carried on the first structure (10) and extending towards the second structure (15), and having opposite first and second sides; and a rigid frame (40) mounted on the second structure (15) so as to be translatable relative thereto in a direction (S) substantially parallel to the said axis, the frame (40) comprising: a first seal portion (42) having opposite exterior and interior sides and a first seal face (60) on the interior side thereof, at least a portion of the first seal face (60) being in communication with the first pressure region (HP), and a second seal portion (44) spaced from the first seal portion (42) and having opposite exterior and interior sides and a second seal face (70) on the interior side thereof, at least a portion of the second seal face (70) being in communication with the second pressure region (LP), the first and second seal faces (60, 70) being spaced apart from one another with the first seal face (60) located to the first side of the sealing member (20) and the second seal face (70) located to the second side of the sealing member (20), and the frame (40) being configured and arranged such that the exterior sides of the first and second seal portions (42, 44) of the frame (40) are substantially pressure-balanced relative to each other; wherein: the first seal face (60) of the first seal portion (42) of the frame (40) and the first side of the sealing member (20) are configured to form a first pressure reduction zone (64), and the second seal face (70) of the second seal portion (44) of the frame (40) and the second side of the sealing member (20) are configured to form a second pressure reduction zone (74), and at least a portion of the first pressure reduction zone (64) is located relatively distal, in a direction substantially normal to the said axis, from the first structure (10) and at least a portion of the second pressure reduction zone (74) is located relatively proximal, in a direction substantially normal to the said axis, to the first structure (10), whereby the frame (40) is translatable relative to the second structure (15) in the said direction (S) substantially parallel to the said axis in response to relative movement of the first structure (10) along the said axis.

2.   A sealing arrangement according to claim 1, wherein the feature of the exterior sides of the first and second seal portions (42, 44) of the frame (40) being substantially pressure-balanced relative to each other is provided for or achieved at least in part by virtue of either: (i) the exterior side of the second seal portion (44) of the frame (40) being in fluid communication with the first pressure region (HP) and sealed from the second pressure region (LP), or (ii) the exterior side of the first seal portion (42) of the frame (40) being in fluid communication with the second pressure region (LP) and sealed from the first pressure region (HP).

3.   A sealing arrangement according to claim 2, wherein a secondary seal device (90) is provided for effecting such a sealing of the exterior side of the second (44), or alternatively the first (42), as the case may be, seal portion from the first (HP), or alternatively the second (LP), as the case may be, pressure region, such that the exterior sides of the first and second seal portions (42, 44) of the frame (40) are substantially pressure-balanced relative to each other, and optionally wherein the secondary seal (90) seals a fluid communication route between the first (HP) and second (LP) pressure regions via the exterior sides of the first and second seal portions (42, 44) of the frame (40).

**4.** A sealing arrangement according to claim 3, wherein the secondary seal device (90) is located at a distance, in a direction substantially normal to the said axis along which the first structure (10) is movable relative to the second structure (15), effective to substantially pressure-balance the exterior sides of the first and second seal portions (42, 44) of the frame (40) relative to each other, the said location of the secondary seal device (90) being intermediate the relatively distal and the relatively proximal radial locations, relative to the first structure (10), of the respective portions of the first and second pressure reduction zones (64, 74)

**5.** A sealing arrangement according to claim 4, wherein the said location of the secondary seal device (90) is substantially equidistant, in the said direction substantially normal to the said axis, between the first and second pressure reduction zones (64, 74).

**6.** A sealing arrangement according to any preceding claim, wherein the first structure (10) is an engine component or structural element which is rotatable about the said axis, or about a rotational axis parallel to the said axis, along which it is axially movable relative to the second structure (15).

**7.** A sealing arrangement according to any preceding claim, wherein the frame (40) defines a chamber (48) in fluid communication with at least a portion of each of the first and second seal faces (60, 70) of the first and second seal portions (42, 44), which chamber has an intermediate pressure (IP) which is intermediate the pressures of the first (HP) and second (LP) pressure regions.

**8.** A sealing arrangement according to claim 7, wherein the intermediate pressure chamber (IP) extends circumferentially, and wherein the intermediate pressure chamber (IP) is substantially compartmentalised circumferentially by the provision therein of one or more, optionally a plurality of, baffle or divider elements (2200) extending into the intermediate pressure chamber (IP).

**9.** A sealing arrangement according to any preceding claim, wherein the frame (40) is mounted on the second structure (15) by a mechanism constructed and arranged or configured to permit relative translational movement between the frame (40) and the second structure (15) at least in the said direction substantially parallel to the said axis.

**10.** A sealing arrangement according to any preceding claim, wherein the first seal face (60) of the first seal portion (42) and the first side of the sealing member (20) are separated by a first clearance gap, and the second seal face (70) of the second seal portion (44) and the second side of the sealing member (20) are separated by a second clearance gap, wherein the first clearance gap contains or accommodates the first pressure reduction zone formed by the first seal face (60) and the first side of the sealing member (20), and the second clearance gap contains or accommodates the second pressure reduction zone formed by the second seal face (70) and the second side of the sealing member (20).

**11.** A sealing arrangement according to claim 10, wherein each of the said first and second clearance gaps is non-uniform in width, such that the width of each respective clearance gap changes or varies along a longitudinal dimension perpendicular to its width.

**12.** A sealing arrangement according to any preceding claim, wherein either: (i) the first and second pressure reduction zones are constructed and/or arranged so that their respective general longitudinal directions are substantially parallel to each other on the opposite sides of the sealing member (20); or (ii) the first and second pressure reduction zones are constructed and/or arranged so that their respective general longitudinal directions are substantially non-parallel, or optionally angled, with respect to each other on the opposite sides of the sealing member (20), wherein the respective general longitudinal directions of the first and second pressure reduction zones are arranged symmetrically with respect to each other on the opposite sides of the sealing member (20).

**13.** A sealing arrangement according to any preceding claim, wherein each of the first and second pressure reduction zones comprises, respectively, at least one first subzone (62, 72) defining a first clearance gap between the relevant seal face (60, 70) and the relevant side of the sealing member (20), and at least one second subzone (64, 74) defining a second clearance gap between the relevant seal face (60, 70) and the relevant side of the sealing member (20), wherein the first clearance gap is larger than the second clearance gap.

**14.** A sealing arrangement according to claim 13, wherein each of the first and second pressure reduction zones comprises, respectively, a clearance gap between the relevant seal face (60, 70) and the relevant side of the sealing member (20) which varies continuously in width passing longitudinally therealong.

**15.** A sealing arrangement according to claim 13, wherein the configuration of the respective clearance gaps which define the respective first and second pressure reduction zones is such as to include at least one constriction or constriction portion in the said respective clearance gap, optionally wherein the or each said constriction or constriction portion comprises a knife or tooth portion, fin, ridge or lip portion, nose or shoulder portion, or a brush seal or other compliant, flexible or resilient contact-type sealing device.

FIG. 1

FIG. 2(a)

FIG. 2(b)

FIG. 3(a)

FIG. 3(b)

FIG. 4

FIG. 5

FIG. 6(a)

FIG. 6(b)

FIG. 6(c)

FIG. 6(d)

FIG. 6(e)

FIG. 6(f)

FIG. 7(a)

FIG. 7(b)

FIG. 8

FIG. 9

FIG. 10

FIG. 11

FIG. 12

FIG. 13

IP

772

764    773

42    44

763

762    774

HP    LP

20

## FIG. 14

IP

872

864

863    873

42    44

862

874

HP    LP

20

## FIG. 15

FIG. 16

FIG. 17

FIG. 18

FIG. 19

EP 3 133 250 A1

FIG. 20

FIG. 21

FIG. 22

FIG. 23

FIG. 24

Fig 25 (a)

Fig 25 (b)

Section A-A

Fig 26 (a)

Fig 26 (b)

Section A-A

80c

A →

15

A →

48

40

16

**Fig 27 (a)**

15

80c

40

Section A-A

**Fig 27 (b)**

A →

15

80d

A →

48

40

16

**Fig 28 (a)**

15

80d

40

Section A-A

**Fig 28 (b)**

1015

S

1080

**1048**

IP

1040

1042

1016

1090

1096

1060

HP

1070   1044   LP   1010

1020

FIG. 29(a)

1115

S

1180

**1148**

IP

1140

1116

1190

1196

1144

HP   1142

1170   LP

1160

1120

1110

FIG. 29(b)

1215

1280

1248

1240

IP

1216

1242

1290

1296

HP    1260    1270    1244    LP

1210

1220

FIG. 30

1340    1348    1344    LP

1315

1370

1380

1320

IP

S'

1360

1342

1390

1318

HP

1316    FIG. 31    1396    1310

FIG. 32(a)

FIG. 32(b)

1480S1

1440

1480S2

$F_{spring}$

IP

1442

$F_{restore}$

HP

1444

LP

1410

## FIG. 32(c)

1515

1540

1580S1

1580S2

1581a

1548

1581b

IP

1516a

1516b

1590

1542

1596

HP

1560

1570

1544

LP

1520

1510

## FIG. 33(a)

1516b   1580S1                     1580S2
                                                        1516a

1581b                                                   1581a

HP                                                      LP

1580S1        1540        1580S2

FIG. 33(b)

1615

1640

1648

1616b                                                   1616a

IP

1680S1                                                  1680S2

                                                        1690

1642                                                    1696

HP    1660        1670        1644    LP

1620

1610

FIG. 34

1715

S

1780

1748

IP

1740

1800

1716

1790

1796

1742

HP

1760

1770

1744

LP

1710

1720

FIG. 35

1915

S

1948

IP

1980S2

1980S1

1940

1916

1942

1990

1996

HP

1960

1970

1944

LP

1920

1910

FIG. 36

2015

2040    S

2099

2048
IP

2090A

HP

2016

2042

2064    2074    2090B

2096

2060    2070    2044    LP

HP

2020

**FIG. 37**

2148

2200

**FIG. 38**

Europäisches
Patentamt

European
Patent Office

Office européen
des brevets

# EUROPEAN SEARCH REPORT

Application Number

EP 16 18 1868

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 7 249 769 B2 (WEBSTER JOHN R [GB]) 31 July 2007 (2007-07-31) * abstract; figures 2,3,4,7,8,10-12 * * column 3, line 32 - line 36 * * column 4, line 17 - line 19 * * column 6, line 3 - line 6 * * column 5, line 64 - column 6, line 5 * * column 1, line 27 - line 29 * * column 5, line 14 - line 17 * * column 3, lines 13,14 * ----- | 1-14 | INV. F01D11/02 F02C7/28 F16J15/00 |
| A | EP 2 669 556 A1 (ROLLS ROYCE PLC [GB]) 4 December 2013 (2013-12-04) * abstract * * figures 4-25 * ----- | 1-15 | |

TECHNICAL FIELDS
SEARCHED (IPC)

F01D
F02C
F16J

The present search report has been drawn up for all claims

| Place of search | Date of completion of the search | Examiner |
|---|---|---|
| Munich | 15 December 2016 | Klados, Iason |

EPO FORM 1503 03.82 (P04C01)

## ANNEX TO THE EUROPEAN SEARCH REPORT
## ON EUROPEAN PATENT APPLICATION NO.

EP 16 18 1868

This annex lists the patent family members relating to the patent documents cited in the above-mentioned European search report.
The members are as contained in the European Patent Office EDP file on
The European Patent Office is in no way liable for these particulars which are merely given for the purpose of information.

15-12-2016

| Patent document cited in search report | | Publication date | Patent family member(s) | | Publication date |
|---|---|---|---|---|---|
| US 7249769 | B2 | 31-07-2007 | DE | 60116455 T2 | 20-07-2006 |
| | | | EP | 1209389 A2 | 29-05-2002 |
| | | | US | 2002060432 A1 | 23-05-2002 |
| | | | US | 2005285345 A1 | 29-12-2005 |
| EP 2669556 | A1 | 04-12-2013 | EP | 2669555 A1 | 04-12-2013 |
| | | | EP | 2669556 A1 | 04-12-2013 |
| | | | GB | 2503800 A | 08-01-2014 |
| | | | JP | 2013249844 A | 12-12-2013 |
| | | | US | 2013320624 A1 | 05-12-2013 |
| | | | US | 2013320627 A1 | 05-12-2013 |

EPO FORM P0459

For more details about this annex : see Official Journal of the European Patent Office, No. 12/82

**EP 3 133 250 A1**

## REFERENCES CITED IN THE DESCRIPTION

**Patent documents cited in the description**

- US 7249769 B2
- US 20090212501 A1
- US 7249769 B1